# EUROPEAN PATENT APPLICATION

(11) **EP 1 548 609 A1**
(43) Date of publication of application: **29.06.2005**
(21) Application number: 03807976.0
(22) Date of filing: 26.09.2003
(51) Int. Cl.: G06F 17/21

(54) **TEXT EDITION DEVICE AND PROGRAM**

(30) Priority: 27.09.2002 JP 2002282728; 27.03.2003 JP 2003087546
(71) Applicant: Brother Kogyo Kabushiki Kaisha, Nagoya-shi, Aichi 467-8561 (JP)
(72) Inventor: Iwanaga, Kazuhiko, BROTHER KOGYO KABUSHIKI KAISHA, Nagoya-shi, Aichi 467-8561 (JP)
(74) Representative: Hofer, Dorothea, Dipl.-Phys.
(86) International application number: PCT/JP2003/012370
(87) International publication number: WO 2004/034278

(57) **Abstract**

A character string is stored in a character information storage module 11 as text data while the size of each character is stored in a character size storage module 12. The state of a frame in which the character string is displayed or printed is set to a "configuration fixed state" or a "configuration alterable state" by a frame state setting module 14 and the configuration of the frame is stored in a frame configuration storage module 13. When the frame configuration alteration module 14 has set the frame in the "configuration fixed state", a character size alteration module 16 alters the memory contents of the character size storage module 12 so that the character string will fit in the frame. When the frame configuration alteration module 14 has set the frame in the "configuration alterable state", a frame configuration alteration module 13 alters the memory contents of the frame configuration storage module 15 so that the character string will fit in the frame.

## Description

### TECHNICAL FIELD

The present invention relates to a text editing device for editing a character string, and a program for letting a text editing device edit a character string.

### BACKGROUND OF THE INVENTION

As a conventional text editing device, a device letting a user edit a character string while specifying a frame (in which a character string which has been stored as text data is displayed or printed) has been known.

A label creating device as one of such text editing devices has been disclosed in Japanese Patent Provisional Publication No. HEI 07-114547. In the label creating device, when the stored character string, being displayed on the screen with a designated character size, can not be accommodated in the frame which has been specified, the specified frame is enlarged within a range avoiding overlap with adjacent frames.

A text editing device described in Japanese Patent Provisional Publication No.SHO62-267858 has a function of starting one of prescribed processes such as a rectangle (frame) generation process, an intra-rectangle character string generation process, a rectangle editing process and an intra-rectangle character string editing process, in response to a command input corresponding to each process. For example, when a rectangle editing command is inputted, the rectangle editing process is started. In the rectangle editing process, the size and the number of lines of the rectangle is corrected while automatically executing the line feed for the intra-rectangle character string. The intra-rectangle character string editing process is started in response to an input of an intra-rectangle character string editing command. In the intra-rectangle character string editing process, character size data regarding the generated intra-rectangle character string is corrected while automatically executing the line feed for the character string.

### DISCLOSURE OF THE INVENTION

However, according to the text editing function of the label creating device of Japanese Patent Provisional Publication No.HEI07-114547, the frame is automatically enlarged when the stored character string can not be accommodated in the specified frame with the designated character size and thus a user not hoping to change the frame size because of editing restrictions has to reset the character size by himself/herself. Especially in cases where the user previously specifies the configuration of the frame and then inputs a character string to be displayed in the frame, the automatic enlargement of the frame once specified is undesirable to the user since the user in many cases intends to contain all the inputted character string in the frame of the specified configuration. Such a situation is inconvenient to the user and an improvement in workability is hoped for.

When the user hopes to fix the frame, it is possible, instead of enlarging the frame size, to do without displaying part of the character string protruding from the frame; however, that deteriorates the efficiency of text editing. Further, in this case, the user after inputting the character string has to change the frame configuration settings corresponding to the inputted character string and alter the character size settings corresponding to the frame configuration, which is inconvenient and undesirable from the viewpoint of workability.

In the case of the text editing device of Japanese Patent Provisional Publication No.SHO62-267858, it is difficult for a user not accustomed to the device to previously and concretely imagine (at the point of selecting and inputting a command for starting one of the four processes) how the character string after the editing will be displayed or printed in the frame after a text input operation or a line feed operation is conducted in each process. In other words, the user before the editing work can not easily grasp changes in the character string and the frame which will be caused by each process.

The present invention has been made in consideration of the above problems. It is therefore the primary object of the present invention to provide a text editing device and a program offering convenience and high workability.

In accordance with an aspect of the present invention, there is provided a text editing device comprising character information storage means for storing a character string as text data, character size storage means for storing size of each character included in the character string stored in the character information storage means, frame configuration storage means for storing a configuration of a frame in which the character string stored in the character information storage means is displayed or printed, and operation mode setting means for setting an operation mode (specifying status of displaying or printing of the character string stored in the character information storage means in the frame when editing operation is executed) to operation modes including at least a frame configuration fixed state and a frame configuration alterable state. The text editing device further comprises character size alteration means for altering memory contents of the character size storage means so that the character string stored in the character information storage means will fit in the frame in cases where the operation mode setting means has set the operation mode to the frame configuration fixed state, and frame configuration alteration means for altering memory contents of the frame configuration storage means so that the character string stored in the character information storage means will fit in the frame in cases where the operation mode setting means has set the operation mode to the frame configuration alterable state.

By the composition, when the operation mode setting means has set the operation mode to the frame configuration alterable state, the configuration of the frame is successively enlarged as characters are inputted one by one by the user and character strings are stored. Meanwhile, when the operation mode setting means has set the operation mode to the frame configuration fixed state, the character size is automatically changed so as to fit the character string in the frame. Thus, when the user hopes to display or print out the character string with a fixed frame configuration, the user does not have to reset the frame configuration corresponding to the character string nor to reset the character size to suit the frame configuration after inputting the character string. Therefore, a text editing device offering convenience and high workability is provided. The user is allowed to do text editing work while easily switching the operation mode (depending on whether the user hopes to fix the frame configuration or not) only by making the setting through the operation mode setting means.

In accordance with another aspect of the present invention, there is provided a computer program that causes a computer to function as character information storage means for storing a character string as text data, character size storage means for storing size of each character included in the character string stored in the character information storage means, frame configuration storage means for storing a configuration of a frame in which the character string stored in the character information storage means is displayed or printed, and operation mode setting means for setting an operation mode (specifying status of displaying or printing of the character string stored in the character information storage means in the frame when editing operation is executed) to operation modes including at least a frame configuration fixed state and a frame configuration alterable state. The computer program further causes the computer to function as character size alteration means for altering memory contents of the character size storage means so that the character string stored in the character information storage means will fit in the frame in cases where the operation mode setting means has set the operation mode to the frame configuration fixed state, and frame configuration alteration means for altering memory contents of the frame configuration storage means so that the character string stored in the character information storage means will fit in the frame in cases where the operation mode setting means has set the operation mode to the frame configuration alterable state.

By the composition, when the operation mode setting means has set the operation mode to the frame configuration alterable state, the configuration of the frame is successively enlarged as characters are inputted one by one by the user and character strings are stored. Meanwhile, when the operation mode setting means has set the operation mode to the frame configuration fixed state, the character size is automatically changed so as to fit the character string in the frame. Thus, when the user hopes to display or print out the character string with a fixed frame configuration, the user does not have to reset the frame configuration corresponding to the character string nor to reset the character size to suit the frame configuration after inputting the character string. Therefore, a text editing device offering convenience and high workability is provided. The user is allowed to do text editing work while easily switching the operation mode (depending on whether the user hopes to fix the frame configuration or not) only by making the setting through the operation mode setting means.

### BRIEF DESCRIPTION OF THE DRAWINGS

Fig. 1 shows the overall composition of a text editing device to which the present invention is applied.
Fig. 2 is a block diagram showing the hardware configuration of a text editing device in accordance with a first embodiment of the present invention.
Fig. 3 is a block diagram showing functions which are constructed by hardware and software of the text editing device of Fig. 2.
Figs. 4(a) - 4(c) show an example of a series of screen images in a display area of a display device when the user inputs characters without executing frame specification.
Figs. 5(a) - 5(c) show an example of a series of screen images when the user inputs characters after executing the frame specification.
Figs. 6(a) and 6(b) show screen images of the text display area when a new character string is inputted starting from a state shown in Fig. 5(c).
Fig. 7 is a flow chart showing a frame setting process executed by a frame state setting module for setting a frame.
Fig. 8 is a flow chart showing an editing process.
Fig. 9 shows an example of a screen image when line feed position information has been stored in a line feed position storage module and a character string including one or more line feeds and extending for two or more lines is displayed in the frame in the text display area.
Fig. 10 is a flow chart showing a case where a character string including one or more line feeds and extending for two or more lines is processed in step S211 of the process of Fig. 8.
Fig. 11 is a block diagram showing an example of hardware configuration installed in a text editing device in accordance with a second embodiment of the present invention.
Fig. 12 is a functional block diagram showing the functional configuration of the text editing device of Fig. 11.
Fig. 13 shows an example of a graphical user interface screen which is displayed on a display device by an operation mode display control module.
Figs. 14(a) through 14(e) show examples of screen images indicating the statuses of the character string and the frame displayed on the display device during text editing work in a "frame configuration fixed operation mode".
Figs. 15(a) through 15(d) show examples of screen images during text editing work in a "frame height variable operation mode".
Figs. 16(a) through 16(e) show examples of screen images displayed on the display device during text editing work in a "frame width variable operation mode".
Figs. 17(a) through 17(c) show examples of screen images displayed on the display device during text editing work in a "two-direction variable operation mode".
Fig. 18 shows an example of a screen image indicating the change in text display status at the point when text input operation or line feed operation is executed (text display statuses before and after the operation) with a "set operation mode" set to the "frame configuration fixed operation mode".
Fig. 19 shows an example of a screen image indicating the change in text display status at the point when text input operation or line feed operation is executed with the "set operation mode" set to the "frame height variable operation mode".
Fig. 20 shows an example of a screen image indicating the change in text display status at the point when text input operation or line feed operation is executed with the "set operation mode" set to the "frame width variable operation mode".
Fig. 21 shows an example of a screen image indicating the change in text display status at the point when text input operation or line feed operation is executed with the "set operation mode" set to the "two-direction variable operation mode".
Fig. 22 is a flow chart showing an operation mode setting process executed by the text editing device of the second embodiment.
Fig. 23 is a flow chart showing the editing process when the "set operation mode" has been set to the "frame configuration fixed operation mode".
Fig. 24 is a flow chart showing the editing process when the "set operation mode" has been set to the "frame height variable operation mode".
Fig. 25 is a flow chart showing the editing process when the "set operation mode" has been set to the "frame width variable operation mode".
Fig. 26 is a flow chart showing the editing process when the "set operation mode" has been set to the "two-direction variable operation mode".
Fig. 27 is an external view showing a label writer of the stand-alone type as a modification of the embodiment of the present invention.

### BEST MODE FOR CARRYING OUT THE INVENTION

Referring now to the drawings, a description will be given in detail of preferred embodiments in accordance with the present invention.

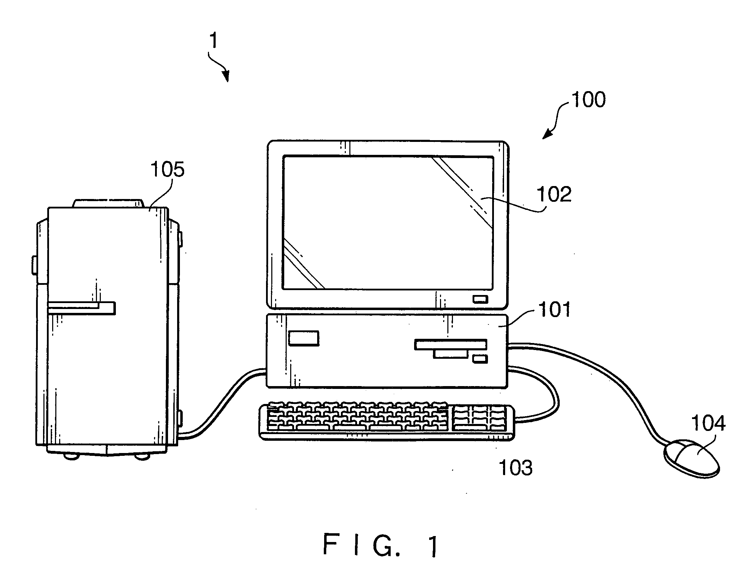

Fig. 1 shows the overall composition of a text editing device 1 to which the present invention is applied.

As shown in Fig. 1, the text editing device 1 is composed as a label writer which includes a personal computer 100 and a printing device 105 for printing on a label tape. The text editing device 1 includes a computer main body 101, a display device 102, a keyboard 103 as an input means, a mouse (pointing device) 104 as an input means, and the printing device 105.

In the following, two embodiments which are implemented in composition like that of the text editing device 1 of Fig. 1 will be described.

### [Embodiment 1]

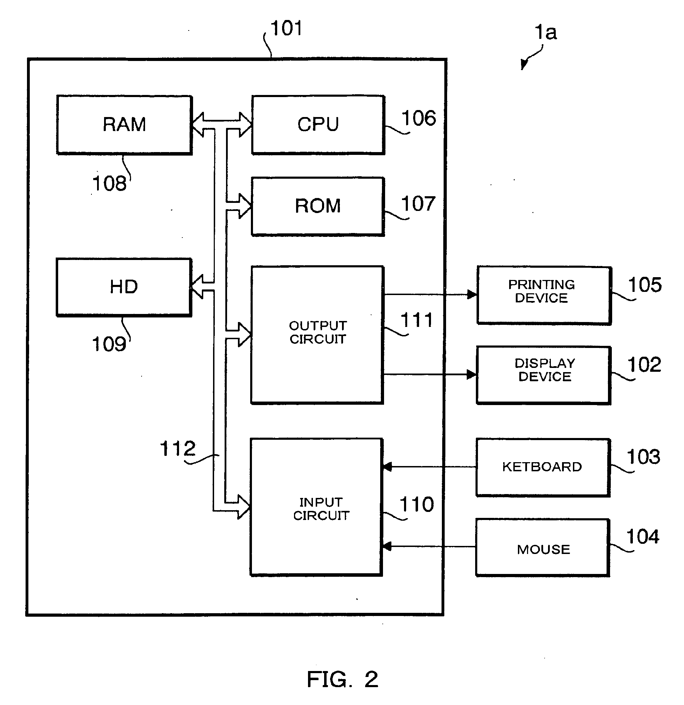

Fig. 2 is a block diagram showing the hardware configuration of a text editing device 1a in accordance with a first embodiment of the present invention.

As shown in Fig. 2, inside the main body 101 of the personal computer 100 of the first embodiment, a CPU (Central Processing Unit) 106, a ROM (Read Only Memory) 107, a RAM (Random Access Memory) 108, an HD (Hard Disk) 109, an input circuit 110 and an output circuit 111 are connected together by a bus 112. To the main body 101, the printing device 105 and the display device 102 are connected via the output circuit 111, while the keyboard 103 and the mouse 104 are connected via the input circuit 110.

The ROM 107 is a read-only storage device storing various programs to be used for controlling the operation of the text editing device 1a. The hard disk (HD) 109 is a readable and writable storage device storing a variety of software including a program for letting the computer function as the text editing device 1a (The program can be installed in an arbitrary computer by, for example, prestoring the program in a removable record medium like a CD-ROM, FD, MO, etc.). The HD 109 also stores scalable font data which is used for storing the image of each character not as a bitmap but as vector information. When a character is displayed (or printed), the scalable font data for the character is expanded depending on the resolution of an output device (102, 105).

The CPU 106 executes various calculations and processes based on input signals inputted via the input circuit 110 and various programs/data stored in the ROM 107, HD 109 and RAM 108. The CPU 106 outputs signals to the display device 102 and the printing device 103 via the output circuit 111. The RAM 108 is a readable and writable volatile storage element, in which various calculation results by the CPU 106, etc. are stored.

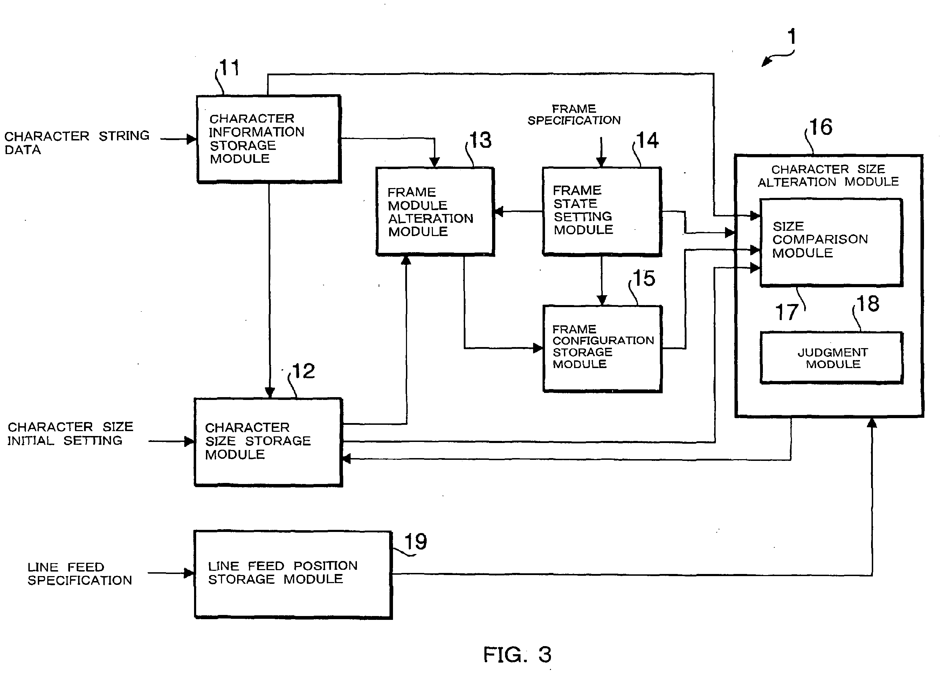

Fig. 3 is a block diagram showing functions which are constructed by the hardware and software of the text editing device 1a.

As shown in Fig. 3, the text editing device 1a includes a character information storage module (character information storage means) 11, a character size storage module (character size storage means) 12, a frame configuration alteration module (frame configuration alteration means) 13, a frame state setting module (frame state setting means) 14, a frame configuration storage module (frame configuration storage means) 15, a character size alteration module (character size alteration means) 16, and a line feed position storage module (line feed position storage means) 19. In this embodiment, the character information storage module 11, the character size storage module 12, the frame configuration storage module 15 and the line feed position storage module 19 are implemented by the RAM 108. The frame state setting module 14, the frame configuration alteration module 13 and the character size alteration module 16 correspond to functions implemented by the CPU 106.

The character information storage module 11 stores a character string inputted via the input circuit 110 as text data in response to a character input by the user operating the keyboard 103. The character size storage module 12 stores the size of each character included in the character string stored in the character information storage module 11. When data are stored in the character information storage module 11 and the character size storage module 12, the stored data are expanded as image data in a prescribed area of the RAM 108. Thus, the character string stored in the character information storage module 11 is displayed on the display device 102 via the output circuit 111 according to the character size settings stored in the character size storage module 12.

The frame state setting module 14 sets the state of a frame (in which the character string stored in the character information storage module 11 is displayed or printed) to a configuration fixed state or a configuration alterable state. The frame is a rectangular indication on the screen, indicating an area accommodating the character string when the character string stored in the character information storage module 11 is displayed on the display device 102 or printed by the printing device 105. Incidentally, the configuration (shape) of the frame is not limited to a rectangle.

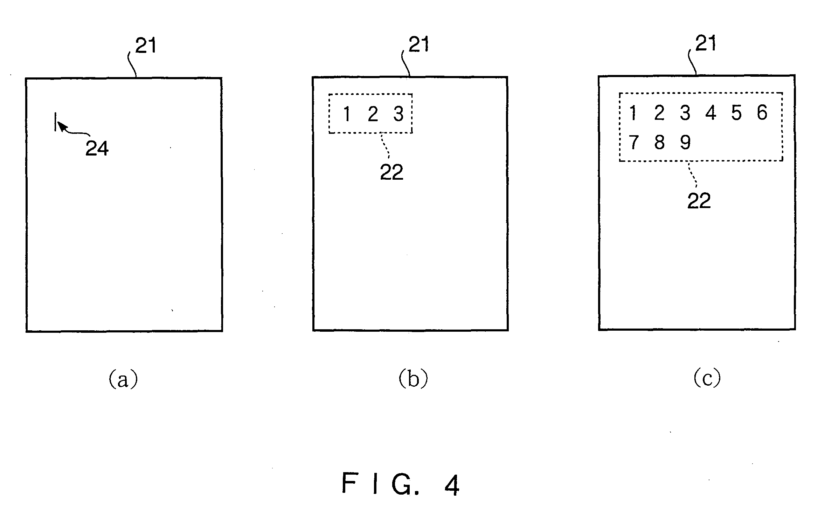

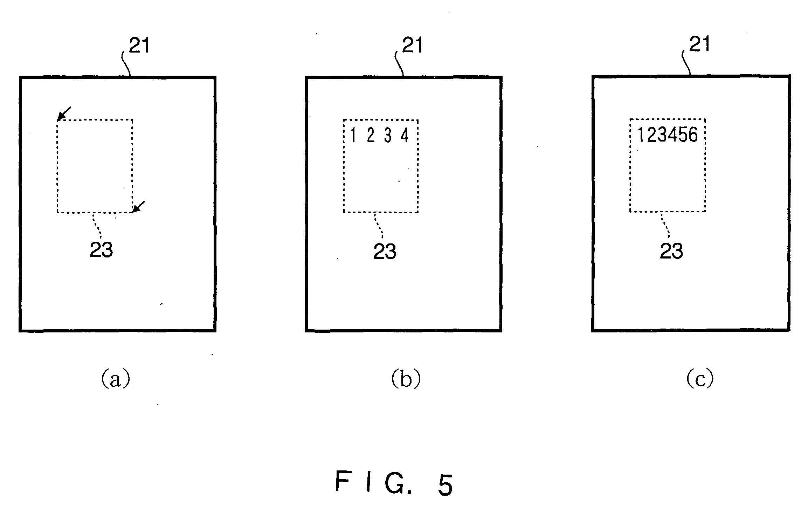

Figs. 4 and 5 show frames 22 and 23 (dotted lines) displayed in a text display area 21 of the display device 102, as examples of the frame.

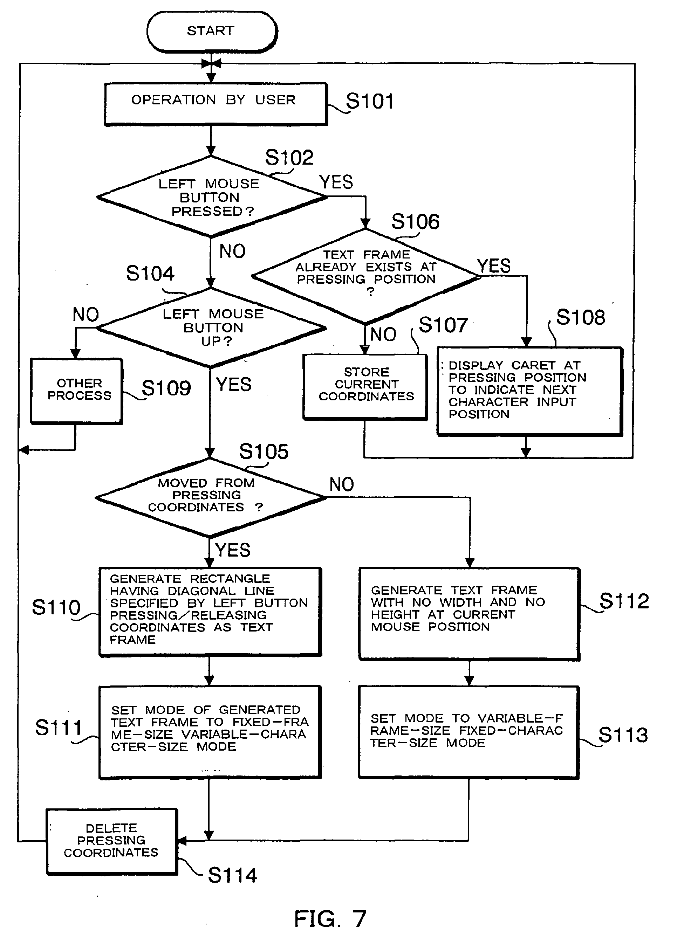

Figs. 4(a) - 4(c) show an example of a series of screen images in the display area 21 of the display device 102 when the user inputs characters without executing frame specification. The frame specification means specification for fixing the size of the frame. The frame specification will be explained in detail later referring to Fig. 5(a) or Fig. 7. In the case of Figs. 4(a) - 4(c), the frame state setting module 14 has set the state of the frame 22 in the "configuration alterable state" and a frame state flag has been set to a value representing the "configuration alterable state". The frame state flag, previously assigned a storage area in the RAM 108, is stored being associated with the frame 22 whose configuration is stored in the frame configuration storage module 15.

When the text editing device 1a is started up, a cursor 24 appears in the text display area 21 and the text editing device 1a gets ready to receive character input. The user can input a character string from the position of the cursor 24 (Fig. 4(a)). When the user inputs the character string from the state of Fig. 4(a), the frame configuration alteration module 13 enlarges the frame configuration as shown in Figs. 4(b) and 4(c) depending on the size of the inputted character string.

Meanwhile, Figs. 5(a) - 5(c) show an example of a series of screen images when the user inputs characters after executing the frame specification. The specification of the frame 23 is carried out by dragging the mouse 104 on a graphical user interface screen, for example. As shown in Fig. 5(a), the user moves the mouse cursor to an upper left arrow in the text display area 21, clicks the left mouse button, moves (drags) the mouse cursor to the lower right, and releases the left mouse button (drops) with the mouse cursor placed at a lower right arrow. By the operation, the specification of the area of the frame 23 (i.e. the frame specification) is completed. In response to the specification of the frame 23, the frame state setting module 14 sets the state of the frame 23 to the "configuration fixed state" and the frame state flag for the frame 23 is set to a value representing the "configuration fixed state", by which the configuration of the frame 23 will not be altered from that time on.

The frame configuration storage module 15 stores information on the configuration of the frame which has been set in the "configuration fixed state" or the "configuration alterable state". Specifically, the frame configuration storage module 15 stores the size of the frame, that is, a frame height (length in the vertical direction of Fig. 5 or Fig. 4) and a frame width (length in the horizontal direction of Fig. 4 or Fig. 5). Together with the frame size information (height, width), frame position information (e.g. coordinates of the upper left corner of the frame in the text display area 21) is also stored in the frame configuration storage module 15. Incidentally, it is also possible to use coordinates of the upper left corner and lower right corner of the frame as the information on the frame configuration, instead of the frame width and frame height.

When the frame state has been set to the "configuration alterable state" by the frame state setting module 14, the frame configuration alteration module 13 alters memory contents of the frame configuration storage module 15 so that the character string stored in the character information storage module 11 can be accommodated in the frame. In other words, when the frame state flag has the value representing the "configuration alterable state", the frame configuration alteration module 13 alters the data stored in the frame configuration storage module 15 so that the configuration of the frame 22 will be enlarged corresponding to the size of the whole character string as shown in the screen images of Figs. 4(b) and 4(c) each time when a character string is stored in the character information storage module 11. Incidentally, the term "character string" used in this specification can also mean only one character.

In the case of Fig. 4(b), a character string "123" has been stored in the character information storage module 11. The configuration of the frame 22 shown in Fig. 4(b) has been changed so that the character string "123" (being displayed in the character size stored in the character size storage module 12) can be fitted in the frame 22.

In Fig. 4(c), the configuration of the frame 22 has been altered corresponding to a character string "123456789".

On the other hand, when the frame state flag has the value representing the "configuration fixed state", the frame configuration alteration module 13 does not change the frame configuration even when a new character string is inputted and stored in the character information storage module 11. The initial character size when a character is initially inputted without the frame specification may be set based on initial setting data existing in the HD 109 at the point of the startup of the text editing device 1a or a character size setting made by the user at the position of the cursor 24.

When the frame state has been set to the "configuration fixed state" by the frame state setting module 14, the character size alteration module 16 changes the character size (changes the data stored in the character size storage module 12) so that the character string stored in the character information storage module 11 can be fitted in the frame. In other words, when the frame state flag has the value representing the "configuration fixed state", the character size alteration module 16 reduces the character size so that the whole character string can be accommodated in the frame 23 (having the configuration stored in the frame configuration storage module 15) as shown in the screen images of Figs. 5(b) and 5(c) each time when a character string is stored in the character information storage module 11. In the screen image of Fig. 5(b), the character size stored in the character size storage module 12 for a character string "1234" stored in the character information storage module 11 has been changed so that the character string "1234" can be fitted in the frame 23. Similarly, in Fig. 5(c), the character size has been altered so that a character string "123456" can be fitted in the frame 23.

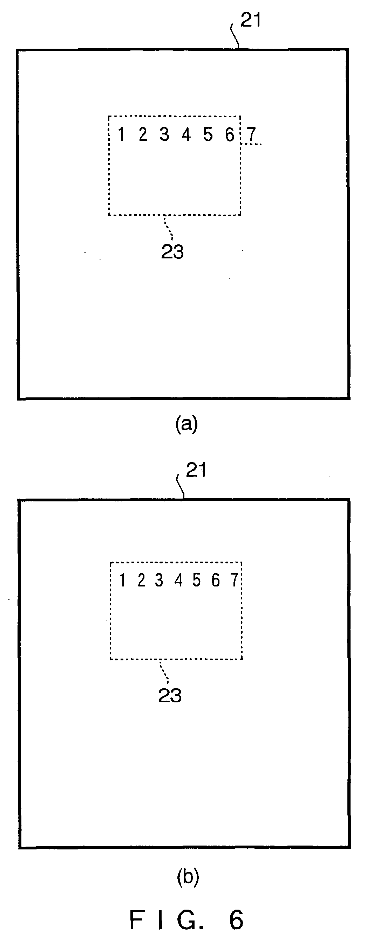

Specifically, the character size alteration module 16 includes a size comparison module 17 and a judgment module 18 (see Fig. 3). When the frame state flag has the value representing the "configuration fixed state", the size comparison module 17 compares the size of the whole character string with the size of the frame (determined by the frame configuration) each time when a character string is stored in the character information storage module 11. Figs. 6(a) and 6(b) show screen images of the text display area 21 when a new character string is inputted starting from the state shown in Fig. 5(c). When a character string "7" (indicated with an underlined oblique font) is inputted after the character string "123456" as shown in Fig. 6(a), the size comparison module 17 figures out the size of the whole character string assuming that the character string "7" is additionally displayed inside the frame 23 in the text display area 21 in the character size stored in the character size storage module 12. For example, the size comparison module 17 figures out the length of the whole character string in a column-increasing direction (width direction of the frame 23) (and/or the length of the whole character string in a line-increasing direction (height direction of the frame 23)). Thereafter, the size comparison module 17 compares the character string "123456" in Fig. 6(a) with the frame width of the frame 23 stored in the frame configuration storage module 11.

The judgment module 18 judges whether the whole character string can be accommodated in the frame 23 or not based on the comparison by the size comparison module 17. In the case of Fig. 6(a), the judgment module 18 judges that the size (i.e. the length in the column-increasing direction) of the whole character string "1234567" will not fit in the frame 23 if the newly inputted character string "7" is additionally displayed.

In the case where the judgment module 18 judged that the whole character string will not fit in the frame 23, the character size alteration module 16 changes the character size (alters the data stored in the character size storage module 12) so that the whole character string including the newly inputted character string "7" can be accommodated in the frame 23, that is, the character string "1234567" including the newly inputted character string "7" is scaled down to fit in the frame 23 as shown in Fig. 6(b).

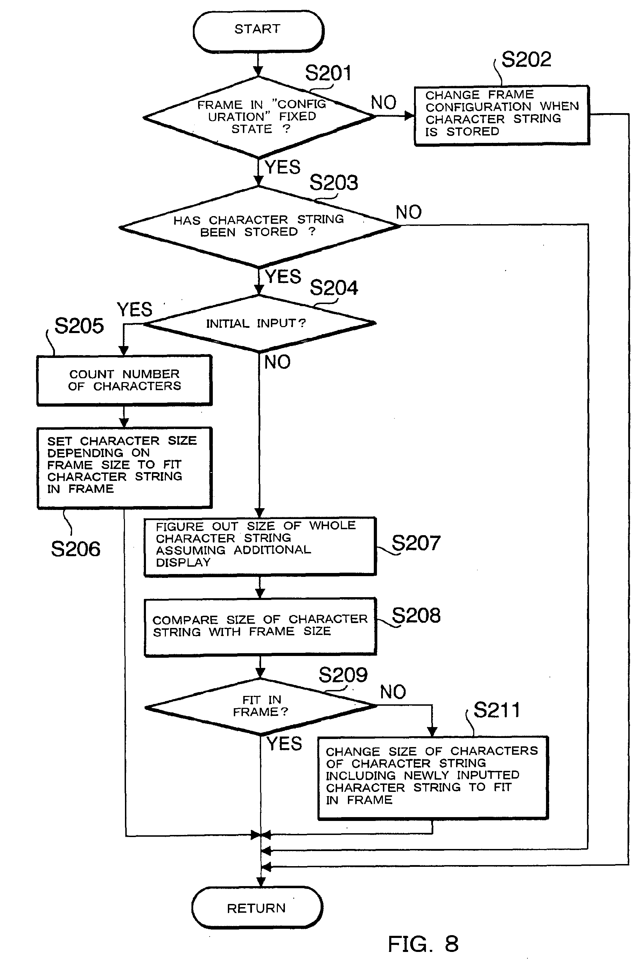

In the following, a process executed by the text editing device 1a of this embodiment will be described referring to flow charts of Figs. 7 and 8. Fig. 7 is a flow chart showing a frame setting process executed by the frame state setting module 14 (under the control by the CPU 106) for setting the frame. First, when the text editing device 1a is operated by the user (step (hereinafter represented by a symbol S) 101), whether the left button of the mouse 104 has been pressed (clicked) or not is judged (S102). If the operation by the user is the pressing (clicking) of the left mouse button (S102: YES), whether a text frame (either in the "configuration fixed state" or in the "configuration alterable state") already exists at the pressing position (mouse click position on the screen) or not is judged (S106). If there exists no frame at the pressing position (S106: NO), the CPU 106 stores current coordinates (coordinates of the pressing position) in the frame configuration storage module 15 and thereafter repeats the process from the step S101. If there exists a frame at the pressing position (S106: YES), the CPU 106 displays a caret (indicating the next character input position) at the pressing position and thereafter repeats the process from the step S101.

If the operation by the user is not the pressing of the left mouse button in the step S102 (S102: NO), whether the left mouse button is up (released) and the storing of the pressing (clicking) coordinates in the step S107 has been executed or not (whether the drag-and-drop operation has been done or not) is judged (S104). A state where the left mouse button is not judged to be up (S104: NO) corresponds to a state where no mouse operation has been done or a state where the left mouse button is still depressed. In this case (S104: NO), a process other than the frame state setting process is executed (S109). Thereafter, the process returns to the step S101.

On the other hand, if the operation by the user is the releasing of the left mouse button and the pressing coordinates in the step S107 has been stored (S104: YES), whether the left mouse button releasing coordinates are different from the pressing coordinates or not (whether the mouse has moved from the pressing position or not) is judged (S105).

If the mouse has moved from the pressing coordinates (S105: YES), that is, if the left mouse button has been released after the mouse was moved with the left button pressed, a rectangle having a diagonal line specified by the left button pressing coordinates and the left button releasing coordinates is generated as the frame (text frame) as shown in Fig. 5(a) (S110). In other words, the configuration of the frame is stored in the frame configuration storage module 15. Subsequently, the CPU 106 sets the state (operation mode) of the generated frame to the "configuration fixed state (fixed-frame-size variable-character-size mode)" (S111).

On the other hand, if the mouse has not moved from the pressing coordinates (S105: NO), that is, if the left mouse button has been released at the left mouse button pressing position, a text frame having no frame width and no frame height is generated at the current mouse position (i.e. at the pressing position) (S112). In other words, a frame configuration with a frame width of 0 and a frame height of 0 is stored in the frame configuration storage means. Subsequently, the CPU 106 sets the state (operation mode) of the generated frame to the "configuration alterable state (variable-frame-size fixed-character-size mode)" (S113). After the step S111 or S113, the pressing coordinates which have been stored are deleted (S114).

Fig. 8 is a flow chart showing an editing process. The process shown in Fig. 8, executed under the control by the CPU 106, corresponds to the "other process" executed in the step S109 of the flow shown in Fig. 7. First, whether the state of the frame is the "configuration fixed state" or not (whether the frame state flag represents the "configuration fixed state" or not) is judged in step S201. If the frame state is not the "configuration fixed state" (S201: NO), that is, if the frame state is the "configuration alterable state", the frame configuration alteration module 13 changes the configuration of the frame corresponding to the character string inputted by the user as shown in the example of Fig. 4 (S202). Thereafter, the editing process of Fig. 8 is ended (the control returns to Fig. 7).

If the frame state is the "configuration fixed state" in the step S201 (S201: YES), whether a character string has been stored in the character information storage module 11 or not (whether there has been a character input through the keyboard 103 or not) is judged (S203). If there has been no input of character string (S203: NO), the process of Fig. 8 is ended. If there has been a character string input (S203: YES), whether or not the character string input was the initial input (whether or not the character string was the one first inputted to the frame in the "configuration fixed state") is judged (S204).

If the character string input is judged to be the initial input (S204: YES), the number of characters of the inputted character string is counted (S205) and the character size of the initially inputted character string is set depending on the counted number of characters and the size of the frame so that the character string can be fitted in the frame (S206). The character size set is stored in the character size storage module 12.

For example, when the initially inputted character string is "1234" as shown in Fig. 5(b), the character size of the character string made of four characters is set to a size allowing the character string to fit in the width of the frame 23. In this step, if the frame 23 is low (short in the height direction) and extremely wide, the character size is set so that the character string can fit in the height of the frame 23. After the character size of the initially inputted character string is set and stored in the character size storage module 12 (S206), the process of Fig. 8 is ended. According to this process (S205, S206), whatever frame configuration is specified by the user, a character size suitable for the specified frame configuration is set automatically. Therefore, after the frame specification, the user can start text editing work with an easy-to-see display screen without the need of making the initial character size settings.

If the character string input is not judged to be the initial input (that is, if the new character string was inputted following a character string already stored in the character information storage module 11) (S204: NO), the size of the whole character string assuming the additional display of the newly inputted character string is figured out by the size comparison module 17 of the character size alteration module 16 as mentioned above (S207). Subsequently, the size of the character string is compared with the frame size by the size comparison module 17 (S208) and whether the size of the whole character string fits in the frame or not is judged by the judgment module 18 (S209).

If the character string is judged to fit in the frame (S209: YES), the process of Fig. 8 is ended without the alteration of the character size of the character string including the newly inputted character string by the character size alteration module 16. On the other hand, if the character string is not judged to fit in the frame (S209: NO), the character size alteration module 16 reduces the size of characters of the character string including the newly inputted character string (S211). After the altered character size is stored in the character size storage module 12, the process of Fig. 8 is ended.

By the frame setting process and the editing process (Fig. 7, Fig. 8) explained above, when the frame state setting module 14 has set the frame in the "configuration alterable state", the configuration of the frame is successively enlarged as characters are inputted one by one by the user and character strings are stored. Meanwhile, when the frame state setting module 14 has set the frame in the "configuration fixed state", the character size is automatically changed so as to fit the character string in the frame. Thus, when the user hopes to display or print out the character string with a fixed frame configuration, the user does not have to reset the frame configuration corresponding to the character string nor to reset the character size to suit the frame configuration after inputting the character string. Therefore, according to this embodiment, a text editing device offering convenience and high workability is provided. The user is allowed to do text editing work while easily switching the frame between the "configuration alterable state" and the "configuration fixed state" through the frame state setting module 14.

The text editing device 1a further includes the line feed position storage module 19 as shown in Fig. 3. The line feed position storage module 19 stores line feed position information which is used for displaying or printing out the character string stored in the character information storage module 11 while starting new lines at intended positions. Also when the frame state is the "configuration fixed state" and the line feed position information has been stored in the line feed position storage module 19, the character size alteration module 16 changes the memory contents of the character size storage module 12 so that the whole character string stored in the character information storage module 11 can be accommodated in the frame.

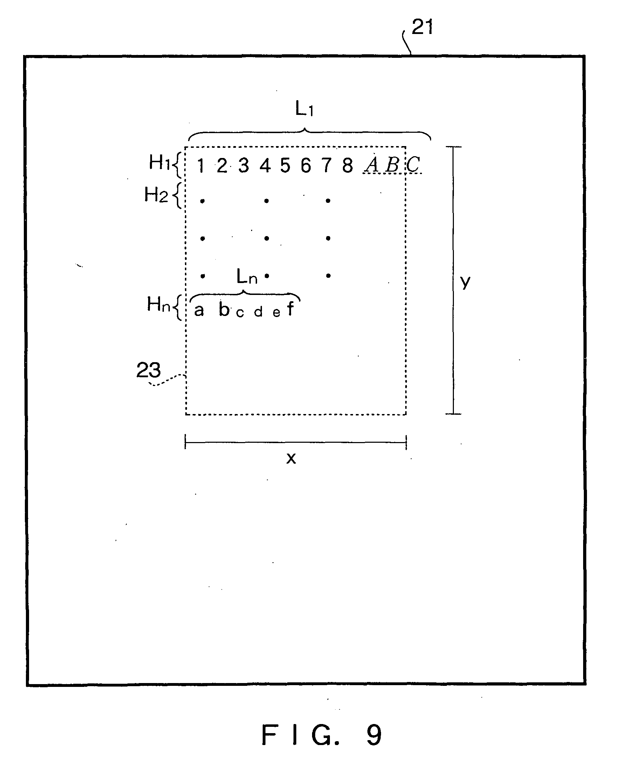

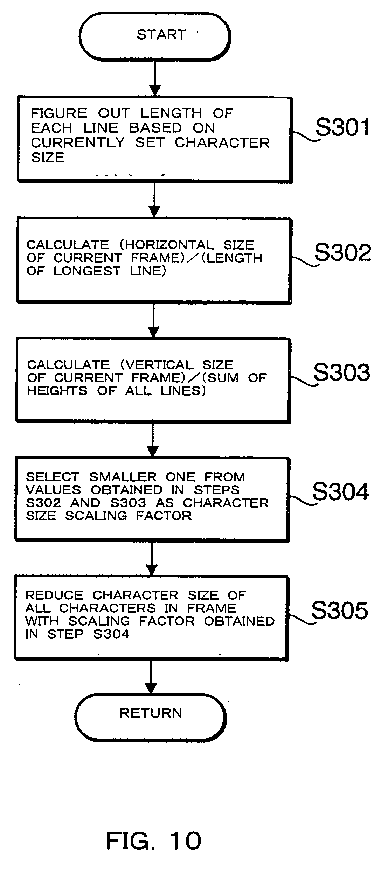

Fig. 9 shows an example of a screen image when the line feed position information has been stored in the line feed position storage module 19 and a character string including one or more line feeds and extending for two or more lines is displayed in the frame 23 in the text display area 21. Fig. 10 is a flow chart showing a case where a character string including one or more line feeds and extending for two or more lines is processed in the step S211 of the process of Fig. 8. In the state shown in Fig. 9, a character string extending for n lines has been stored in the character information storage module 11. The width and height of the frame 23 are x and y, respectively. Fig. 9 shows a case where a character string "ABC" (indicated with an underlined oblique font) is inputted subsequent to a character string "12345678" in the first line.

In the example of Fig. 9, the step S209 of Fig. 8 has judged that the whole character string can not be fitted in the frame 23 if the newly inputted character string "ABC" is additionally displayed in the character size stored in the character size storage module 12. In this case, the process of Fig. 10 first figures out the length of each line based on the character size currently set (S301). The lengths of the lines (line 1 - line n) of the character string including the newly inputted character string will hereinafter be expressed as L₁ ···· Lₙ. Subsequently, the frame width x of the current frame 23 is divided by the length of the longest line (S302). In the case of Fig. 9, the step S302 calculates x/L₁ since the length of the longest line is L₁.

Subsequently, the frame height (vertical size) y of the current frame 23 is divided by the sum of heights of all the lines (S303). In the example of Fig. 9, the step S303 calculates y/(H₁ + H₂ + ··· Hₙ), where H₁, H₂ ··· Hₙ denote the heights of the lines of the character string. From the values obtained in the steps S302 and S303, the smaller one is selected as a scaling factor for the character size (S304). In the case of Fig. 9, x/L₁ obtained in the step S302 is smaller than y/(H₁ + H₂ + ··· Hₙ) obtained in the step S303, therefore, x/L₁ is employed as the scaling factor. The character size alteration module 16 changes (reduces) the character size of all the characters included in the frame 23 with the scaling factor obtained in the step S304 (S305). By the above process, the character size of all the characters in the whole character string (line 1 - line n) including the character string "ABC" newly inputted to the first line is reduced so as to fit the whole character string in the frame 23. When the reduction of character size is completed, the process of Fig. 10 is ended (the control returns to the process of Fig. 8).

Incidentally, in the example of Fig. 9, the character string "cde" in the line n is displayed in a smaller character size compared to other character strings ("ab", "f"). In such a case where the frame is in the "configuration fixed state" and different character sizes have been stored in the character size storage module 12, the character size alteration module 16 changes the character sizes (data stored in the character size storage module 12) so that the character string stored in the character information storage module will fit in the frame while maintaining the ratios among the different character sizes stored in the character size storage module 12. Since all the character strings contained in the frame 23 are scaled down with the scaling factor obtained in the step S304, the size ratios between the character string "cde" and other character strings ("ab", "f", etc.) are maintained in the reduction of character sizes.

As above, in the text editing device 1a, even when characters of different sizes are included in the character string inputted by the user, the character size alteration is carried out so that the whole character string will fit in the frame while maintaining the size ratios. Therefore, the user can continue text editing work with an easy-to-see display screen without the need of altering the character sizes by himself/herself.

Further, in the text editing device 1a, even in cases where the frame state is changed from the "configuration alterable state" to the "configuration fixed state" by the frame state setting module 14 and at the same time the frame configuration stored in the frame configuration storage module 13 is changed, the character size alteration module 16 alters the memory contents of the character size storage module 12 so that the character string stored in the character information storage module 11 will fit in the frame. For example, in cases where the user inputting characters without executing the frame specification as shown in Fig. 4 changes the configuration of the frame 22 by dragging the mouse in the text display area (that is, selecting the frame 22 by pressing the left mouse button with the mouse cursor placed at a lower left corner of the frame 22, moving the mouse keeping on pressing the left button, and releasing the left button) from the state of Fig. 4(c), the step S104 of the process of Fig. 7 judges that the left mouse button is up (S104: YES) and the step S105 judges that the mouse has moved from the pressing position (S105: YES). The frame configuration altered and specified by the user is stored in the frame configuration storage module 15 (S110) and the frame state is set to the "configuration fixed state" by the frame state setting module 14. The sizes of all characters contained in the frame are changed by the character size alteration module 16 so that the whole character string will fit in the frame set in the "configuration fixed state" (specifically, the character sizes are enlarged/reduced when the frame configuration has been enlarged/reduced by the user).

As above, with the text editing device 1a, even in text editing work without fixing the frame, the user can start editing the character string with the frame in the "configuration fixed state" from some point, by the setting through the frame state setting means.

Incidentally, it is possible to make various modifications to the first embodiment of the present invention which has been described above. For example, while the text editing device 1a in the above embodiment is configured specifically as a label writer, the present invention is not restricted to label writers but is applicable to a variety of systems (e.g. a printing system using a printer) requiring text editing work. While the label writer described in the above embodiment employs a personal computer as means for inputting, editing and displaying characters, the present invention is also applicable to label writers having an input device, display device, printing device, etc. in one body (the so-called stand-alone label writers).

The pointing device for letting the user execute the frame specification work is not limited to a mouse. Any device can be used as long as the coordinates of the frame can be specified with the device.

In the case where characters of different character sizes have been stored in the character size storage module, it is also possible in another embodiment to alter the memory contents of the character size storage means without maintaining the ratios among the different character sizes. Another embodiment without the line feed position storage module is also possible. The configuration (shape) of the frame stored in the frame configuration storage module is not limited to a rectangle but can be various shapes.

Yet another embodiment, including a means for informing the user that the character size can not be reduced further (when the character size has been reduced to the minimum size) by issuing an error message, is also possible.

### [Embodiment 2]

In the following, a second embodiment in accordance with the present invention will be described referring to figures.

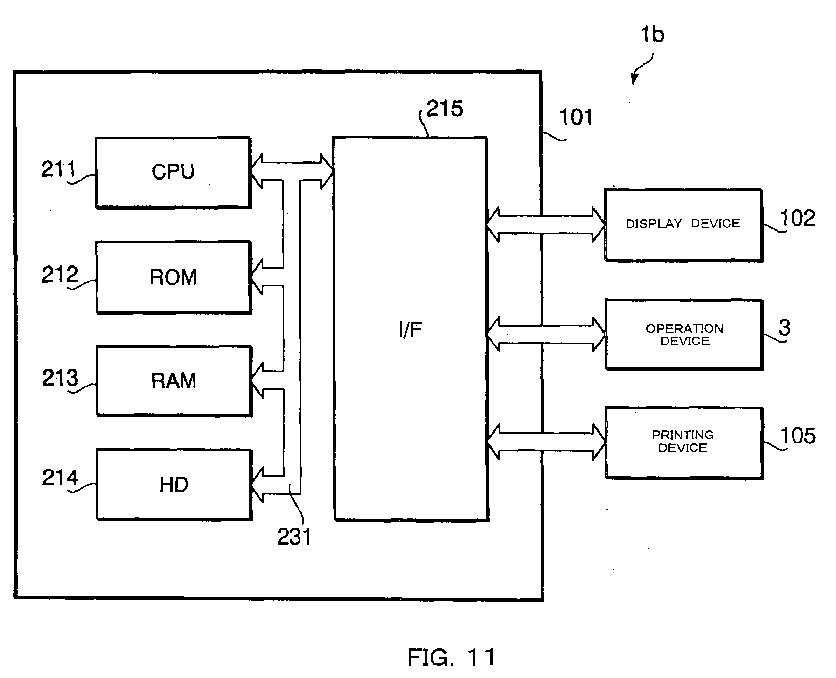

Fig. 11 is a block diagram showing an example of hardware configuration installed in a text editing device 1b in accordance with the second embodiment of the present invention. The text editing device 1b includes a CPU (Central Processing Unit) 211, a ROM (Read Only Memory) 212, a RAM (Random Access Memory) 213, a hard disk (HD) 214 and an interface (I/F) 215 which are connected together by a bus 231.

A display device 102, operating devices (keyboard 103, mouse 104) and a printing device 105 are connected to the CPU 211 via the interface (I/F) 215. As the printing device 105, various types of printing devices, such as a tape printer for printing character strings on tape-like print media, a printer for printing on plain paper (A4 size, B4 size, postcard size, etc.) as print media, a stamp producing device for producing a stamp or seal, etc. can be used.

The ROM 212 stores various programs to be used for controlling the operation of the text editing device 1b. The HD 214 stores a variety of software including a program for letting the personal computer function as the text editing device 1b (The program can be installed in an arbitrary computer by prestoring the program in a removable record medium like a CD-ROM, FD, MO, etc.). The HD 214 also stores various data created by the user.

The CPU 106 executes various calculations and processes based on data inputted via the operating means 3 and various programs/data stored in the ROM 212, HD 214 and RAM 213. The CPU 211 sends data to the display device 102 and the printing device 105 via the interface 215. The RAM 213 stores various calculation results by the CPU 211, etc.

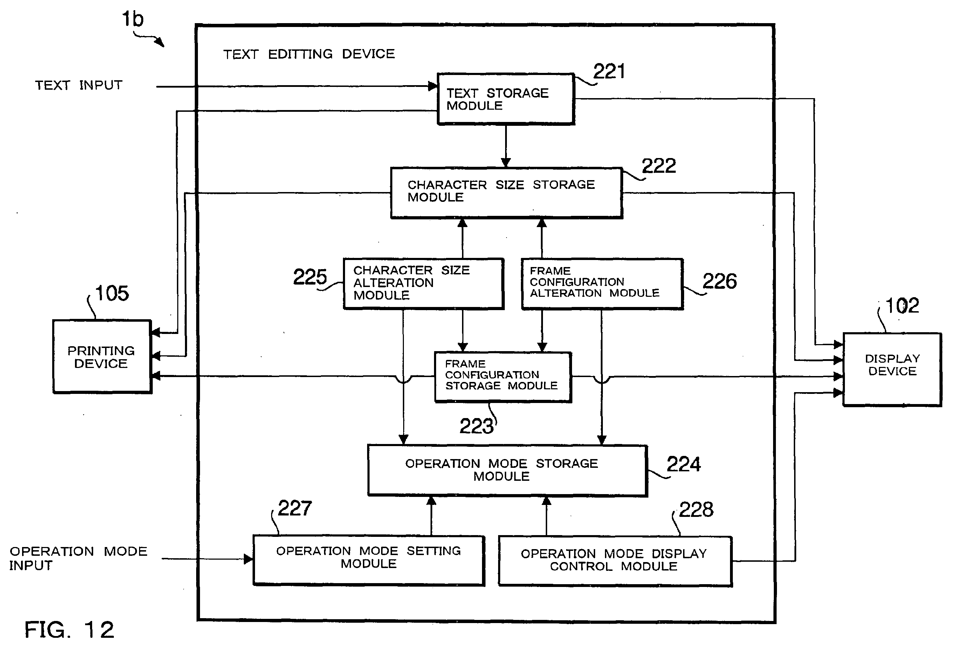

Fig. 12 is a functional block diagram showing the functional configuration of the text editing device 1b. As shown in Fig. 12, the text editing device 1b includes a text storage module 221, a character size storage module 222, a frame configuration storage module 223, an operation mode storage module 224, a character size alteration module 225, a frame configuration alteration module 226, an operation mode setting module 227 and an operation mode display control module 228. In this embodiment, the text storage module 221, the character size storage module 222, the frame configuration storage module 223 and the operation mode storage module 224 are formed in the RAM 213 or the HD 214. The character size alteration module 225, the frame configuration alteration module 226, the operation mode setting module 227 and the operation mode display control module 228 correspond to functions implemented by the CPU 211.

The text storage module 221 stores text data in response to a character string input by the user operating the operating device 3. The character size storage module 222 stores the size of each character included in the character string stored in the text storage module 221. When data are stored in the text storage module 221 and the character size storage module 222, the stored data are expanded as image data in a prescribed area of the RAM 213 and displayed by the display device 102.

The frame configuration storage module 223 stores the configuration of a frame in which the character string stored in the text storage module 221 is displayed or printed. The frame configuration storage module 223 stores, for example, the size of the frame (frame height, frame width) as the frame configuration. Together with the frame size information (height, width), frame position information (e.g. coordinates of the upper left corner of the frame) is also stored in the frame configuration storage module 223. As the information on the frame configuration, it is also possible to store only the coordinates of the upper left corner and lower right corner of the frame instead of the frame width and frame height.

The operation mode storage module 224 stores information on an operation mode which can be set by the operation mode setting module 227 which will be explained later. The display/print formats of the character string which has been stored in the text storage module 221 by text input operation or line feed operation is specified by an operation mode which has been set and settled (confirmed) by the operation mode setting module 227 (hereinafter referred to as a "set operation mode").

The character size alteration module 225 changes the sizes of characters stored in the character size storage module 222 when the "set operation mode" stored in the operation mode storage module 224 is an operation mode that can change the character sizes ("character size variable operation state"). In the "character size variable state", the character size alteration module 225 changes the character sizes stored in the character size storage module 222 (memory contents of the character size storage module 222) so that the character string stored in the text storage module 221 will fit in the frame stored in the frame configuration storage module 223.

The frame configuration alteration module 226 changes the configuration of the frame stored in the frame configuration storage module 223 when the "set operation mode" stored in the operation mode storage module 224 is an operation mode that can change the frame configuration ("frame configuration variable operation state"). In this case, the frame configuration alteration module 226 changes the frame configuration stored in the frame configuration storage module 223 (memory contents of the frame configuration storage module 223) so that the character string stored in the text storage module 221 will fit in the frame having the changed frame configuration.

The operation mode setting module 227 can set the operation mode to the following four operation modes:
- "frame configuration fixed operation mode"
- "frame height variable operation mode"
- "frame width variable operation mode"
- "two-direction variable operation mode"
The "frame configuration fixed operation mode" corresponds to the aforementioned "character size variable state", while the "frame height variable operation mode", the "frame width variable operation mode" and the "two-direction variable operation mode" correspond to the aforementioned frame configuration variable state". Details of each operation mode will be explained later. As will be described later, the user carries out the input operation on a graphical interface screen which is displayed on the display device 102 by the operation mode display control module 228. The operation mode setting module 227 sets the operation mode according to information inputted by the user.

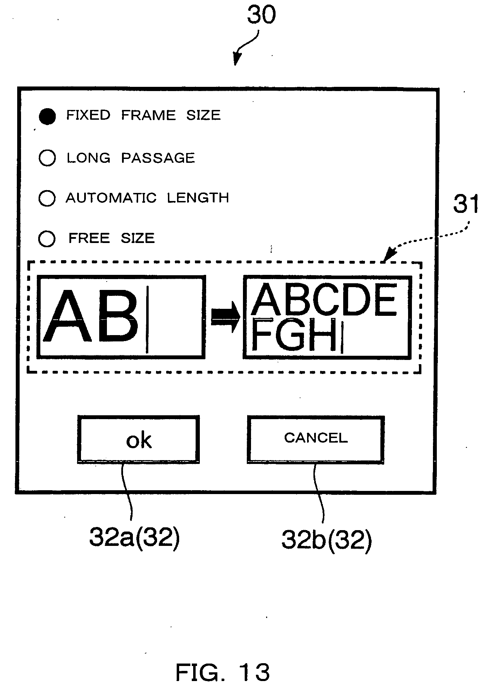

Fig. 13 shows an example of a graphical user interface screen 30 (hereinafter referred to as a "screen 30") displayed on the display device 102 by the operation mode display control module 228. The screen 30 shown in Fig. 13 pops up on the display device 102 when an unshown menu screen, etc. displayed on the display device 102 is operated by the user, for example.

On the screen 30, the four operation modes that can be set by the operation mode setting module 227 are shown. Specifically, names of the operation modes: "fixed frame size (frame configuration fixed operation mode)", "long passage (frame height variable operation mode)", "automatic length (frame width variable operation mode)" and "free size (two-direction variable operation mode)" are displayed.

The screen 30 is also provided with radio buttons "○" corresponding to the operation mode names. A desired operation mode can be selected by moving the mouse cursor to the position of the operation mode and clicking. In the case of the screen 30, the radio button "○" of the selected operation mode turns into a filled circle "●".

In response to the user's operation on the screen 30 for selecting an operation mode, the operation mode setting module 227 sets the operation mode to the selected operation mode. In the case of Fig. 13 where the "fixed frame size" has been selected, the operation mode setting module 227 sets the operation mode to the "frame configuration fixed operation mode".

As shown in Fig. 13, the operation mode display control module 228 further displays a screen image 31 indicating the change in text display status at the point when text input operation or line feed operation is executed (text display statuses before and after the operation) depending on the "set operation mode". In the example of Fig. 13, a screen image 31 (surrounded by dotted lines) indicating the change in the text display status in the "frame configuration fixed operation mode" is shown.

Further, buttons 32 (32a, 32b) that can be clicked by the mouse are also displayed on the screen 30 under the control by the operation mode display control module 228. The "set operation mode" is settled in the currently set operation mode (i.e. the operation mode currently set on the screen is confirmed) when the user clicks the button 32a ("OK" button). When the "set operation mode" settled by the operation on the screen 30 is different from the operation mode stored in the operation mode storage module 224, the operation mode is overwritten with the newly decided "set operation mode". On the other hand, when the settled "set operation mode" is identical with the operation mode stored in the operation mode storage module 224, the memory contents of the operation mode storage module 224 are not overwritten.

When the user clicks the button 32b ("CANCEL" button), the process on the screen 30 is ended and the window for the screen 30 is closed. In this case, the "set operation mode" which has been set on the screen 30 is not confirmed (that is, the memory contents of the operation mode storage module 224 are not overwritten), by which the memory contents of the operation mode storage module 224 are maintained to indicate the "set operation mode" before displaying the screen 30.

Next, the operation modes that can be set by the operation mode setting module 227 ("frame configuration fixed operation mode", "frame height variable operation mode", "frame width variable operation mode" and "two-direction variable operation mode") will be explained. Incidentally, the operation mode setting module 227 may also be configured to be able to set operation modes other than the four operation modes.

When the operation mode is set to the "frame configuration fixed operation mode", the character sizes are changed so as to fit the inputted character string in the frame. In other words, the data in the character size storage module 222 are changed so that the character string stored in the text storage module 221 will fit in the frame stored in the frame configuration storage module 223 when text input operation or line feed operation is executed.

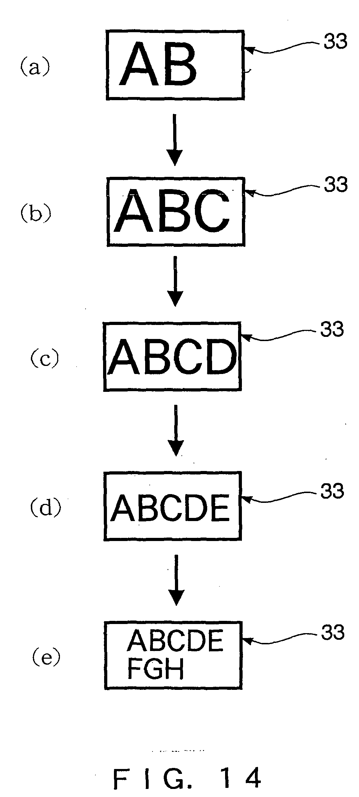

Fig. 14 shows examples of screen images indicating the statuses of the character string and the frame displayed on the display device 102 during text editing work in the "frame configuration fixed operation mode".

Fig. 14(a) shows a status in which a character string "AB" inputted by the user has been displayed in a frame 33 which has been set by the initial setting or by the user. When a character string "C" is inputted following the status of Fig. 14(a), the character size alteration module 225 judges whether or not the alteration of character sizes is necessary for accommodating the character string "ABC" in the frame 33 stored in the frame configuration storage module 223 (i.e. compares the size of the character string "ABC" with that of the frame 33). In the example of Fig. 14, the character size alteration module 225 does not change the character size of the character string "ABC" (i.e. the character string "ABC" is displayed in the frame 33 in the same character size as that in Fig. 14(a)) since the frame 33 is larger than the character string "ABC" (see Fig. 14(b)).

When a character string "D" is further inputted following the status of Fig. 14(b), the character size alteration module 225 judges that the character string "ABCD" gets larger than the frame 33 if displayed in the same character size. In this case, the character size alteration module 225 reduces the character size so as to fit the character string "ABCD" in the frame 33, by which the character string "ABCD" is displayed in the character size fitting in the frame 33 as shown in Fig. 14(c). A similar process is executed when a character string "E" is further inputted (see Fig. 14(d)).

When a character string "FGH" is further inputted after line feed operation following the status of Fig. 14(d), the character size alteration module 225 reduces the character size of the character string "ABCDEFGH" so that the character string "ABCDEFGH" of two lines will fit in the frame 33, by which the character string is displayed in the frame 33 as shown in Fig. 14(e).

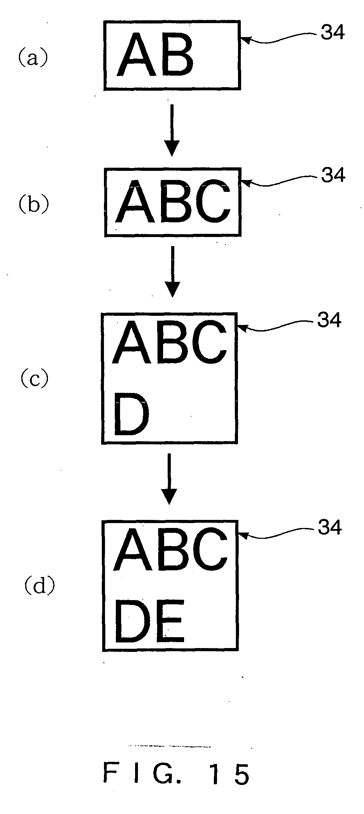

Next, the "frame height variable operation mode" will be explained. In the state where the operation mode has been set to the "frame height variable operation mode", when text input operation or line feed operation is executed, the frame configuration stored in the frame configuration storage module can be altered only in the frame height direction (i.e. the line-increasing direction of the character string). Figs. 15(a) through 15(d) show examples of screen images during text editing work in the "frame height variable operation mode".

Fig. 15(a) shows a status in which a character string "AB" inputted by the user has been displayed in a frame 34 which has been set by the initial setting or by the user. When a character string "C" is inputted following the status of Fig. 15(a), the frame configuration alteration module 226 judges whether or not the character string "ABC" can be displayed in the frame 34 in the state where only the size in the frame height direction can be changed while fixing the size in the frame width direction. In the example of Fig. 15, the frame configuration alteration module 226 does not change the size in the frame height direction since the frame 34 is larger than the character string "ABC" (see Fig. 15(b)). In this case, the character size alteration module 225, which has recognized the "frame height variable operation mode" by referring to the memory contents of the operation mode storage module 224, does not change the memory contents of the character size storage module 222.

When a character string "D" is further inputted following the status of Fig. 15(b), the frame configuration alteration module 226 judges that the character string "ABCD" gets larger than the frame 34 if the character string is displayed in the same character size to stretch in its lengthwise direction. In this case, the frame configuration alteration module 226 changes the memory contents of the frame configuration storage module 223 so that the character string "ABCD" displayed in two lines will fit in the frame 34 (that is, the configuration of the frame 34 is extended in the frame height direction), by which the character string "ABCD" is displayed in the frame 34 as shown in Fig. 15(c). When a character string "E" is further inputted, a process similar to that in Fig. 15(b) is executed (see Fig. 15(d)).

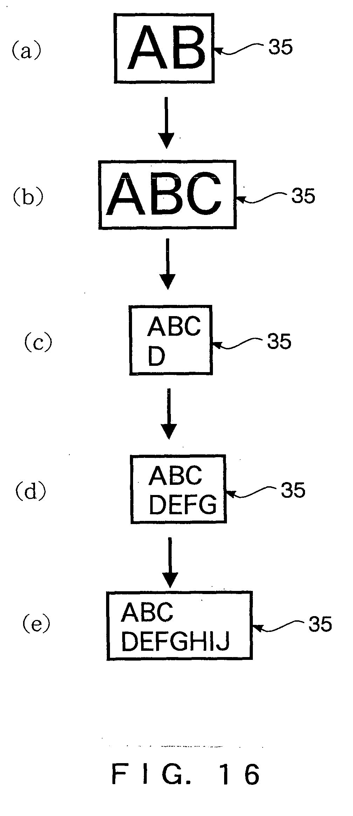

Next, the "frame width variable operation mode" will be explained. In the state where the operation mode has been set to the "frame width variable operation mode", when text input operation or line feed operation is executed, the frame configuration stored in the frame configuration storage module can be altered only in the frame width direction (i.e. a length-increasing direction of the character string). Figs. 16(a) through 16(e) show examples of screen images displayed on the display device 102 during text editing work in the "frame width variable operation mode".

Fig. 16(a) shows a status in which a character string "AB" inputted by the user has been displayed in a frame 35 which has been set by the initial setting or by the user. When a character string "C" is inputted following the status of Fig. 16(a), the frame configuration alteration module 226 determines a frame width that is necessary for displaying the character string "ABC" in the frame 35 in the same character size in the state where only the size of the frame 35 in the frame width direction can be changed while fixing the size in the frame height direction. After determining the frame width necessary for displaying the character string "ABC" in the frame 35, the frame configuration alteration module 226 changes the width of the frame 35 to the determined frame width (alters the memory contents of the frame configuration storage module 223), by which the character string "ABC" is displayed in the frame 35 as shown in Fig. 16(b). In this case, the character size alteration module 225, having recognized the "frame width variable operation mode" by referring to the memory contents of the operation mode storage module 224, does not change the memory contents of the character size storage module 222.

When a character string "D" is further inputted after line feed operation following the status of Fig. 16(b), the character size alteration module 225 reduces the character size of the character string "ABCD" so that the character string "ABCD" of two lines will fit in the frame 35. At the same time, the frame configuration alteration module 226 changes the frame width (data in the frame configuration storage module 223) so that the frame width (size in the frame width direction) will be a width corresponding to the character string after the reduction of character size in the state fixing the size in the frame height direction. Therefore, with the line feed operation, the size of the character string is altered (reduced) to the one corresponding to the fixed frame height, while the width of the frame 35 is changed to the one corresponding to the length of the altered character string in the horizontal direction, by which the character string "ABCD" is displayed to fit in the in the frame 35 as shown in Fig. 16(c).

Fig. 16(d) shows a status in which a character string "EFG" has been inputted further following the status of Fig. 16(c), and Fig. 16(e) shows a status in which a character string "HIJ" has been inputted further following the status of Fig. 16(d). In such cases where text input operation is executed without line feed operation, the character string is displayed to fit in the frame 35 by increasing the frame width as shown in Figs. 16(d) and 16(e).

Finally, the "two-direction variable operation mode" will be explained. In the state where the operation mode has been set to the "two-direction variable operation mode", when text input operation or line feed operation is executed, the frame configuration is altered so that the character string will fit in the frame in a state where the frame configuration stored in the frame configuration storage module 223 can be altered both in the frame height direction and in the frame width direction.

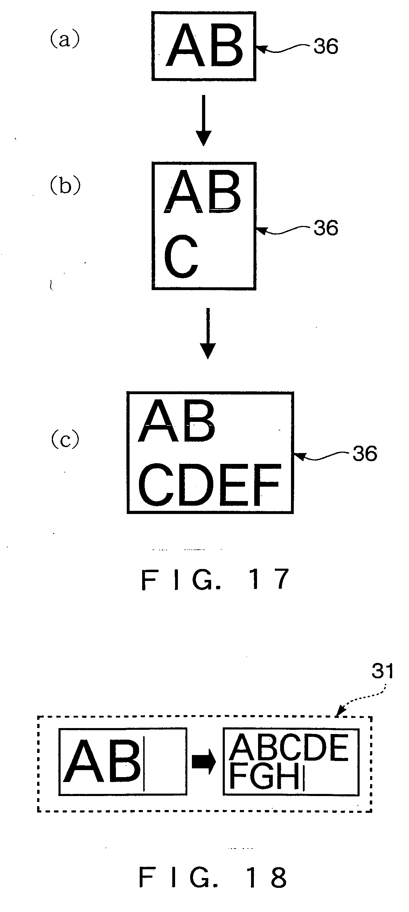

Figs. 17(a) through 17(c) show examples of screen images displayed on the display device 102 during text editing work in the "two-direction variable operation mode".

Fig. 17(a) shows a status in which a character string "AB" inputted by the user has been displayed in a frame 36 which has been set by the initial setting or by the user. When a character string "C" is inputted after line feed operation following the status of Fig. 17(a), the frame configuration alteration module 226 determines a frame height that is necessary for displaying the character string "ABC" in the same character size while starting a new line before the character string "C" and thereby enlarges the frame 36 in the frame height direction (alters the data in the frame configuration storage module 223). In this case, the character size alteration module 225, having recognized the "two-direction variable operation mode" by referring to the memory contents of the operation mode storage module 224, does not change the memory contents of the character size storage module 222. By this, the character string "ABC" is displayed in the frame 36 as shown in Fig. 17(b).

When a character string "DEF" is further inputted following the status of Fig. 17(b), the frame configuration alteration module 226 determines a frame width that is necessary for accommodating the character string "ABCDEF" in the frame 36 when the character string "DEF" is displayed in the same character size to follow the character string "C" in the lengthwise direction of the character string, and thereby enlarges the configuration of the frame 36 in the frame width direction (alters the data in the frame configuration storage module 223). In this case, the character size alteration module 225 does not change the memory contents of the character size storage module 222 similarly to the case of Fig. 17(b). By this, the character string "ABCDEF" is displayed in the frame 36 as shown in Fig. 17(c).

Next, the screen image 31, which is displayed inside the screen 30 displayed on the display device 102 by the operation mode display control module 228 depending on the "set operation mode", will be explained in regard to each operation mode.

Fig. 18 shows an example of the screen image 31 (surrounded by dotted lines) indicating the change in text display status at the point when text input operation or line feed operation is executed (text display statuses before and after the operation) with the "set operation mode" set to the "frame configuration fixed operation mode". The screen image 31 of Fig. 18 corresponds to the change in display status from Fig. 14(a) to Fig. 14(e).

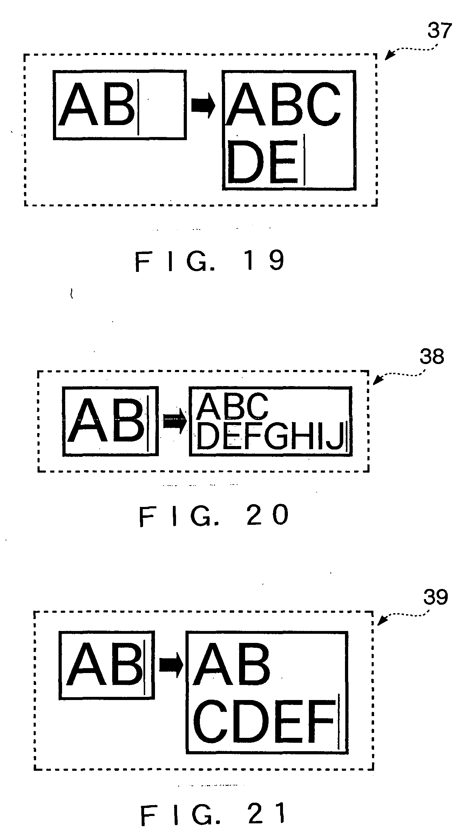

Fig. 19 shows an example of a screen image 37 (surrounded by dotted lines) indicating the change in text display status at the point when text input operation or line feed operation is executed with the "set operation mode" set to the "frame height variable operation mode". The screen image 37 of Fig. 19 corresponds to the change in display status from Fig. 15(a) to Fig. 15(d). The screen image 37 is displayed at a prescribed position in the screen 30 (the part where the screen image 31 is displayed).

Fig. 20 shows an example of a screen image 38 (surrounded by dotted lines) indicating the change in text display status at the point when text input operation or line feed operation is executed with the "set operation mode" set to the "frame width variable operation mode". The screen image 38 of Fig. 20 corresponds to the change in display status from Fig. 16(a) to Fig. 16(e). The screen image 38 is displayed at the prescribed position in the screen 30 (the part for the screen image 31).

Fig. 21 shows an example of a screen image 39 (surrounded by dotted lines) indicating the change in text display status at the point when text input operation or line feed operation is executed with the "set operation mode" set to the "two-direction variable operation mode". The screen image 39 of Fig. 21 corresponds to the change in display status from Fig. 17(a) to Fig. 17(c). The screen image 38 is displayed at the prescribed position in the screen 30 (the part for the screen image 31).

As will be described in the following initial setting examples 1 - 3, the operation mode setting module 227 may initially set the "set operation mode" when the text editing device 1b is started up, depending on the type and conditions of the print media printed on by the printing device 105, by which the user is allowed to start text editing work immediately after the startup of the text editing device 1b in a proper operation mode appropriate for the type and conditions of the print media, without the need of setting the operation mode.

### <Initial Setting Example 1>

When the print medium on which the character string stored in the text storage module 221 will be printed is a tape-like print medium and the size of a print area of the medium in its longitudinal direction is preset, the operation mode setting module 227 initially sets the "set operation mode" to the "frame configuration fixed operation mode", and the "frame configuration fixed operation mode" is stored in the frame configuration storage module 223, by which the user starting up the text editing device 1b can immediately start text editing work while recognizing the fixed frame configuration as the preset print area of the tape-like print medium, without the need of setting the operation mode.

### <Initial Setting Example 2>

When the print medium to be printed on by the printing device 105 is a tape-like print medium and the size of the print area of the medium in its longitudinal direction is not preset (to be arbitrarily set by the user), the operation mode setting module 227 initially sets the "set operation mode" to the "frame width variable operation mode", and the "frame width variable operation mode" is stored in the frame configuration storage module 223, by which the user starting up the text editing device 1b can immediately start text editing work while recognizing the frame configuration alterable only in the frame width direction as the print area alterable in the tape lengthwise direction, without the need of setting the operation mode.

### <Initial Setting Example 3>

When the print medium to be printed on by the printing device 105 is a medium having size in the height direction (line-increasing direction) larger than that in the width direction (lengthwise direction of the character string) (e.g. plain paper of A4 size, B4 size, postcard size, etc.), the operation mode setting module 227 initially sets the "set operation mode" to the "frame height variable operation mode", and the "frame height variable operation mode" is stored in the frame configuration storage module 223, by which the user starting up the text editing device 1b can immediately start text editing work while recognizing the frame configuration alterable only in the frame height direction as the print area of the plain paper, etc., without the need of setting the operation mode.

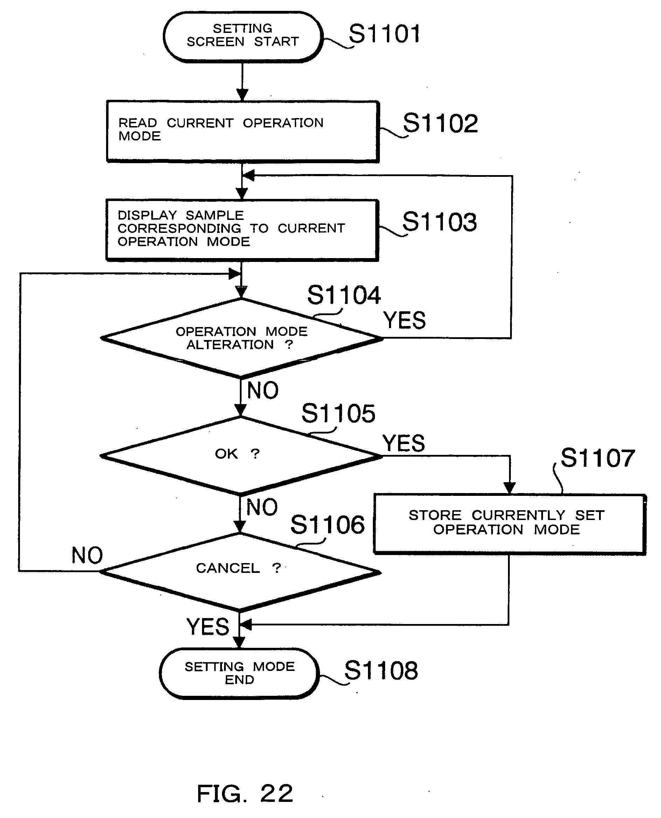

Next, processes executed by the text editing device 1b will be explained referring to flow charts of Figs. 22 through 26. The processes shown in Figs. 22 through 26 are executed under the control by the CPU 211.

Fig. 22 is a flow chart showing an operation mode setting process executed by the text editing device 1b. The process of Fig. 22 is started with the graphical user interface screen 30 (setting screen) of Fig. 13 called as a pop-up screen.

First, when the screen 30 is displayed on the display device 102 as a pop-up screen in response to operation by the user (S1101), the current operation mode is read out (S1102). Specifically, the "set operation mode" stored in the operation mode storage module 224 is read out by the operation mode display control module 228. While displaying the screen 30, the operation mode display control module 228 displays the screen image of operation display examples corresponding to the "set operation mode" (sample) on the screen 30 (S1103). In the example of Fig. 13, a corresponding screen image 31 is displayed on the screen 30 since the "set operation mode" has been set to the "frame configuration fixed operation mode".

Subsequently, whether there has been an alteration of operation mode or not is checked (S1104), that is, whether the operation mode setting has been changed by the user's operation on the screen 30 or not is judged. If the operation mode alteration is judged to have occurred (S1104: YES), the CPU 211 displays a screen image of operation display example after the alteration on the screen 30 (S1103).

On the other hand, if the operation mode alteration is not judged to have occurred (S1104: NO), whether the button 32a ("OK" button) has been operated (clicked) by the user or not is judged (S1105). If the "OK" button 32a is judged to have been operated (S1105: YES), the "set operation mode" (currently set operation mode) is stored in the operation mode storage module 224 (S1107). By this, the memory contents of the operation mode storage module 224 are overwritten with the new operation mode when the operation for altering the operation mode setting is executed.

On the other hand, if the "OK" button 32a is not judged to have been operated (S1105: NO), whether the button 32b ("CANCEL" button) has been operated or not is judged (S1106). If the "CANCEL" button 32b is judged to have been operated (S1106: YES), the window displaying the screen 30 is closed and the operation mode setting process is ended (S1108). If the "CANCEL" button 32b is not judged to have been operated (S1106: NO), the process from the step S1104 is repeated.

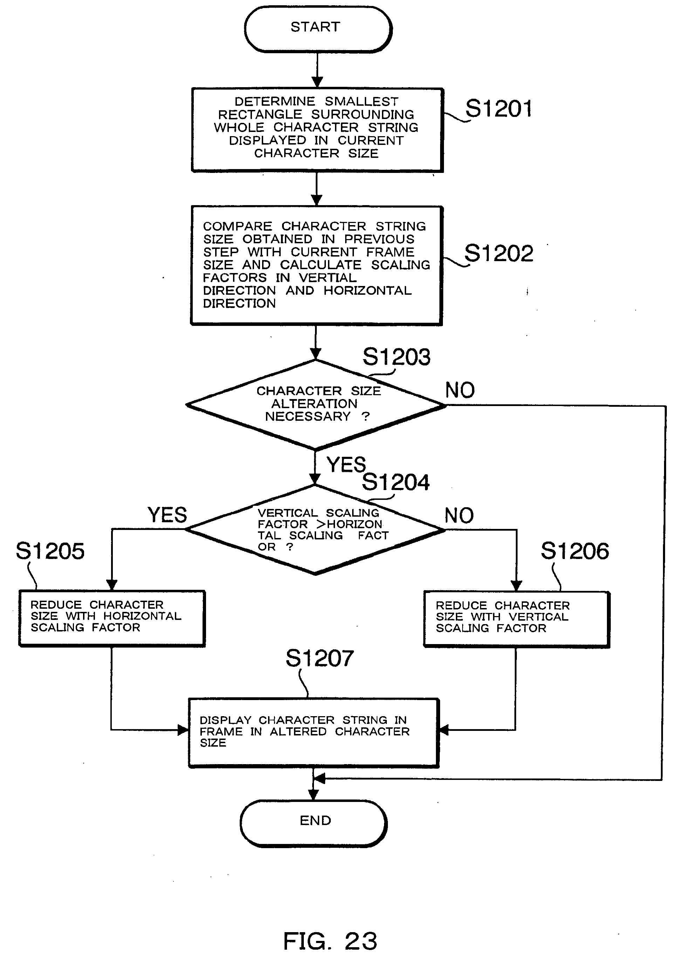

Next, the flow of the editing process in each operation mode will be explained referring to flow charts of Figs. 23 through 26.

Fig. 23 is a flow chart showing the editing process when the "set operation mode" has been set to the "frame configuration fixed operation mode". The process of Fig. 23 is carried out each time when text input operation or line feed operation is executed.

First, when text input operation or line feed operation is executed, the size of the smallest rectangle surrounding the whole character string (all the character string including the input by the operation) displayed in the current character size (the character size of the character string which had been displayed before the operation was executed) is figured out (S1201).

Subsequently, the minimum rectangle size obtained in S1201 is compared with the current frame size and thereby scaling factors in the vertical direction (frame height direction) and the horizontal direction (frame width direction) are calculated (S1202). In other words, the ratio of the frame size to the character string size is calculated in regard to the vertical direction and the horizontal direction. The ratio corresponds to the scaling factor to be used for handling the size of the character string. Each scaling factor takes on a value larger/smaller than 100 % when the character string size is smaller/larger than the frame size.

After the calculation of the scaling factors is finished, whether the alteration of the character size(s) stored in the character size storage module 222 is necessary or not is judged (S1203). When the scaling factors are 100 % or more both in the vertical direction and the horizontal direction, that is, when the whole character string can be accommodated and displayed in the frame since the frame size is larger than the character string size, the character size alteration is judged to be unnecessary (S1203: NO) and the editing process of Fig. 23 is ended.

Meanwhile, when the scaling factor is less than 100 % in the vertical direction or the horizontal direction, that is, when it is impossible to accommodate and display the whole character string in the frame since the frame size is smaller than the character string size in the vertical direction or in the horizontal direction, the character size alteration is judged to be necessary (S1203: YES).

When the character size alteration is judged to be necessary in the step S1203 (S1203: YES), the scaling factors in the vertical direction and the horizontal direction are compared to determine which is larger (S1204). When the vertical scaling factor is judged to be larger than the horizontal scaling factor (S1204: YES), the character size stored in the character size storage module 222 is reduced according to the horizontal scaling factor (S1205). On the other hand, when the vertical scaling factor is judged to be no larger than the horizontal scaling factor (S1204: NO), the character size stored in the character size storage module 222 is reduced according to the vertical scaling factor (S1206).

In either case using the vertical scaling factor or the horizontal scaling factor (S1205, S1206), after the character size reduction process, the character string stored in the text storage module 221 is displayed in the reduced character size(s) in the frame stored in the frame configuration storage module 223 (S1207), by which the editing process of Fig. 23 is ended.

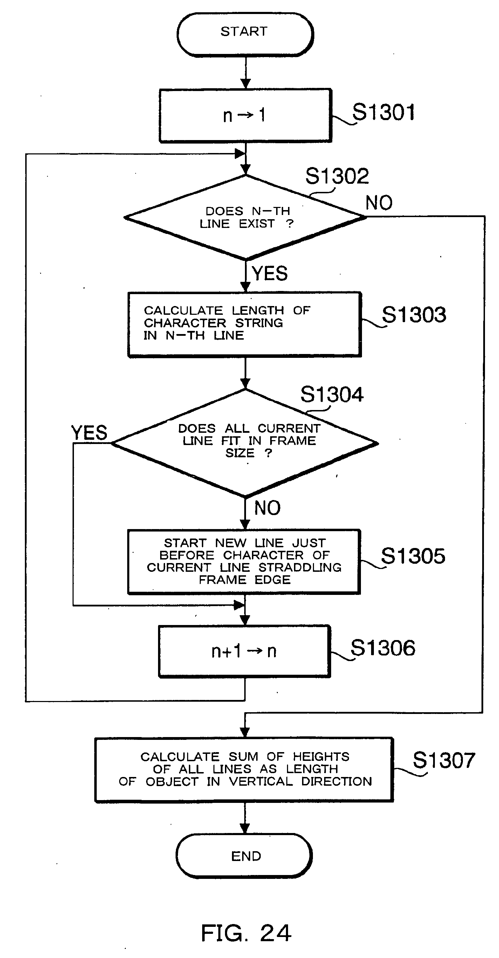

Fig. 24 is a flow chart showing the editing process when the "set operation mode" has been set to the "frame height variable operation mode". The editing process of Fig. 24 is carried out each time when text input operation or line feed operation is executed.

Since the process of Fig. 24 handles the character string in units of lines, when text input operation or line feed operation is executed, the first line of the character string is designated first as the target of process (process target line) by setting a parameter "n" to "1" (S1301). In step S1302, whether the n-th line exists or not is judged. For example, when n = 1, it is judged that there exists a process target line if the first line exists. If the first line does not exist (when no character string has been stored in the text storage module 221 yet), it is judged that there exists no process target line. When the process for the n-th line (S1303 - S1305) is finished, the number "n" is replaced with "n+1" and the loop (S1303 - S1305) is repeated until there remains no process target line.

If the n-th line is judged to exist in the step S1302 (S1302: YES), the length of the n-th line of the character string (or a character string in the n-th line) is calculated (S1303) and whether the character string in the n-th line can fit in the frame stored in the frame configuration storage module 223 or not is judged (S1304). If the n-th line is judged to fit in the frame (S1304: YES), the process for the n-th line is finished and the number "n" is replaced with "n+1" so as to shift the process to the loop for the next line (S1306).

On the other hand, if the character string in the n-th line is not judged to fit in the frame (S1304: NO), a step for starting a new line just before a character of the n-th line straddling the edge of the frame is executed (S1305). In the example of Fig. 15(b), if a character string "D" is further inputted (n = 1), the last character "D" in the character string "ABCD" protrudes from the right edge of the frame 34, therefore, a step for starting a new line just before the character "D" and letting "D" be the first character of the second line is carried out. After the step S1305 is finished, the number "n" is replaced with "n+1" as mentioned above.

By the step S1306 for replacing "n" with "n+1", the process advances to the next line. Thereafter, whether the n-th line exists or not is judged regarding the new "n" (S1302). If the n-th line exists (S1302: YES), the process from S1303 is executed similarly, otherwise (S1302: NO) the process goes out of the loop and advances to the next step.

If there exists no n-th line in the judgment of S1302 (S1302: NO), that is, if the steps S1303 - S1305 have been finished for all the lines, a step for calculating the sum of heights of all the lines as the length of the object (the frame and the character string added together) in the vertical direction is executed (S1307). Thus, the frame height is altered so that the character string extending for all the lines will fit in the frame (the memory contents of the frame configuration storage module 223 are altered) and the character string fitting in the frame is displayed, by which the editing process of Fig. 24 is ended.

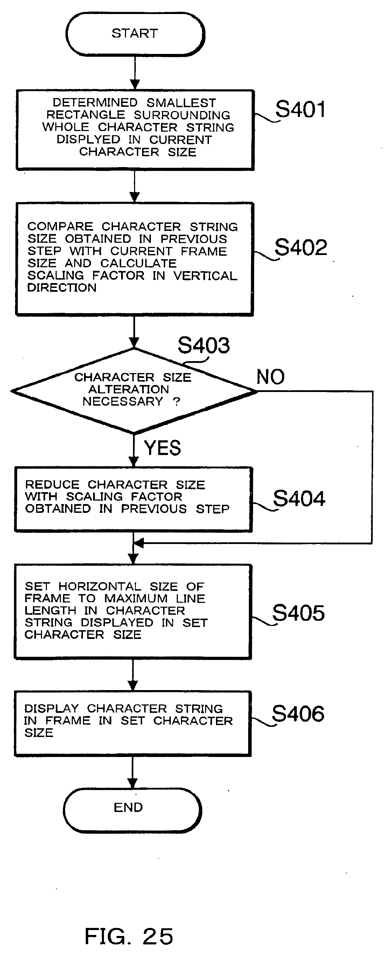

Fig. 25 is a flow chart showing the editing process when the "set operation mode" has been set to the "frame width variable operation mode". The editing process of Fig. 25 is carried out each time when text input operation or line feed operation is executed.

First, when text input operation or line feed operation is executed, the size of the smallest rectangle surrounding the whole character string (all the character string including the input by the operation) displayed in the current character size (the character size stored in the character size storage module 222) is figured out (S401).

Subsequently, the CPU 211 compares the minimum rectangle size obtained in S401 with the current frame size and thereby calculates the scaling factor in the vertical direction (frame height direction) (S402). In other words, the ratio of the frame size to the character string size in the vertical direction is calculated. Before line feed operation is executed, the scaling factor in the vertical direction takes on a value larger than 100 % since the character string fits well in the frame. After line feed operation, the vertical scaling factor falls below 100 % since the character string size in the vertical direction exceeds the frame size.

After the calculation of the vertical scaling factor is finished, whether the alteration of the character size stored in the character size storage module 222 is necessary or not is judged (S403). When the vertical scaling factor is larger than 100 % (when it is judged that no line feed operation has been executed), the character size alteration is judged to be unnecessary (S403: NO) since the vertical size of the frame is larger than that of the character string and the character string can be fitted in the frame height. In this case, step S405 (described later) is executed.

When the vertical scaling factor is smaller than 100 % (when it is judged that line feed operation has been executed), the character size alteration is judged to be necessary (S403: YES) since the vertical size of the frame is smaller than that of the character string and the character string can not be fitted in the frame height. In the case where the character size alteration is judged to be necessary (S403: YES), the character size stored in the character size storage module 222 is reduced according to the vertical scaling factor (S404).

In either of the case where the character size alteration has been judged to be unnecessary (S403: NO) and the case where character size alteration has been judged to be necessary (S403: YES) and the character size has been reduced (S404), the frame size is altered so that the horizontal size of the frame will be equal to the length of the character string in the set character size (character size stored in the character size storage module 222 at that point) so that the frame can accommodate the character string (S405). In this step, when the character string extends for two or more lines, the frame size is altered so that the horizontal size of the frame will be equal to the length of a line (character string) longest among the lines (so that the frame can accommodate the whole character string) (S405).

After the step S405 is finished, the character string stored in the text storage module 221 is displayed with the frame size stored in the frame configuration storage module 223 and the character size stored in the character size storage module 222 (S406). By this, the whole character string is displayed to fit in the frame in the state where the frame configuration is alterable only in the frame width direction (S406) when text input operation or line feed operation is executed. Thereafter, the editing process of Fig. 25 is ended.

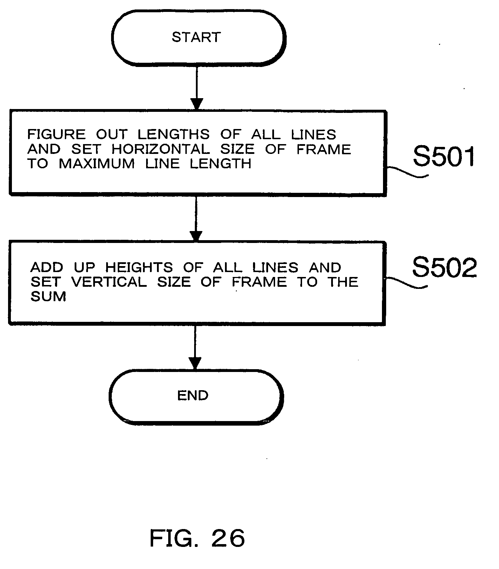

Fig. 26 is a flow chart showing the editing process when the "set operation mode" has been set to the "two-direction variable operation mode". The editing process of Fig. 26 is carried out each time when text input operation or line feed operation is executed.

When operation such as text input is executed, the lengths of all the lines of the character string after the operation are figured out (S501) and the frame size (data in the frame configuration storage module 223) is altered so that the horizontal size of the frame will be equal to the maximum length of the lines (S501). After the step S501 is finished, the heights (sizes in the frame height direction) of all the lines included in the character string are added up, and the frame size is altered so that the vertical size of the frame will be equal to the sum (S502). By this, the whole character string is displayed to fit in the frame when text input operation or line feed operation is executed. Thereafter, the editing process of Fig. 26 is ended.

As described above, by the text editing device 1b, operation modes that can be set by the user are displayed on the graphical user interface screen, while the screen image of display examples indicating the change in text display status at the point when text input operation or line feed operation is executed (text display statuses before and after the operation) is also provided. Therefore, the user setting the operation mode can judge and grasp the change in the frame and character string caused by text input operation, etc. correctly and quickly by checking the screen image of display examples, by which waste of time and effort (like a case where the user actually started editing after setting the operation mode notices that an unexpected operation mode has been set and the operation mode has to be reset by the user) can be prevented. Therefore, efficiency of text editing work can be improved.

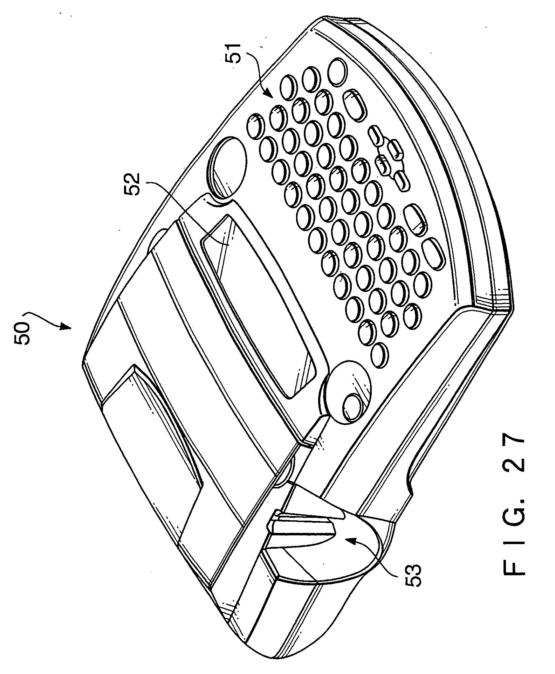

Incidentally, it is possible to make various modifications to the second embodiment which has been described above. For example, the following modifications (1) - (5) can be realized.
(1) The composition of the text editing device is not restricted to the one shown in Fig. 1 which is implemented by connecting a personal computer to a separate device (e.g. printing device). For example, the text editing device may also be implemented in one body containing an input device, display device, printing device, etc., as shown in Fig. 27. Fig. 27 is an external view showing a text editing device 50 configured as a label writer of the so-called stand-alone type. The text editing device 50 includes a keyboard 51 having a lot of keys (character keys, control keys, etc.) on its upper surface and a display 52 for displaying a label screen image, etc. to be referred to during label editing work (text editing work), etc.
   Inside the label writer 50, a variety of hardware for implementing the function as the text editing device, a tape driving/printing mechanism, a cutter for cutting the tape, etc. are placed. The label writer 50 is configured to pull out tape (print medium) from a tape cassette loaded therein, print on the tape in a prescribed manner, cut the tape with the cutter, and eject the tape from an outlet 53. Incidentally, a CPU (Central Processing Unit), a RAM (Random Access Memory), a ROM (Read Only Memory), an EEPROM (Electrically Erasable Programmable Read Only Memory), etc. are installed in the text editing device 50. In the ROM, prescribed programs, etc. have been stored.
(2) The operation mode display module may also be configured to display the screen image examples (indicating statuses before and after text input operation, etc.) on the graphical user interface screen 30 as motion video.
   For example, in the example of the screen 30 shown in Fig. 13, the images shown in Figs. 14(a) through 14(e) may be displayed successively in the part for the screen image 31, instead of displaying the screen image 31. When the operation mode has been set to a mode other than the "frame configuration fixed operation mode", screen images in each operation mode (like those shown in Figs. 15 - 17) may similarly be displayed successively while switching them automatically. The type of the motion video is not limited to the above example. The operation mode display module may employ various display format relevant to motion video.
   Since the screen image of display examples indicating the change in text display status at the point when text input operation or line feed operation is executed (text display statuses before and after the operation) is displayed as motion video, the user can judge and grasp the change in text display status dynamically and more correctly.
(3) The text editing device does not need to support the setting of all the operation modes explained in this embodiment ("frame configuration fixed operation mode", "frame height variable operation mode", "frame width variable operation mode" and "two-direction variable operation mode"), that is, it is possible to configure the text editing device to support part of the operation modes. The setting of other operation modes may also be supported.
(4) Other configurations of the text editing device, not employing or employing part of the initial setting examples 1 - 3 described in this embodiment, are also possible. Initial settings other than those described in the embodiment may also be employed.
(5) It is also possible in the "frame height variable operation mode" to extend the frame height only when line feed operation is executed, while reducing the character size to let inputted characters be displayed or printed in the frame when text input operation is executed without line feed operation.

Incidentally, it is to be appreciated that the present invention is not to be restricted by the contents of the particular illustrative embodiments described above and to be understood based on the contents of the appended claims.

## Claims

1. A text editing device comprising:
character information storage means for storing a character string as text data;
character size storage means for storing size of each character included in the character string stored in the character information storage means;
frame configuration storage means for storing a configuration of a frame in which the character string stored in the character information storage means is displayed or printed;
operation mode setting means for setting an operation mode, specifying status of displaying or printing of the character string stored in the character information storage means in the frame when editing operation is executed, to operation modes including at least a frame configuration fixed state and a frame configuration alterable state;
character size alteration means for altering memory contents of the character size storage means so that the character string stored in the character information storage means will fit in the frame in cases where the operation mode setting means has set the operation mode to the frame configuration fixed state; and
frame configuration alteration means for altering memory contents of the frame configuration storage means so that the character string stored in the character information storage means will fit in the frame in cases where the operation mode setting means has set the operation mode to the frame configuration alterable state.

2. The text editing device according to claim 1, wherein the character size alteration means includes:
size comparison means which compares size of the whole character string when a newly inputted character string is additionally displayed or printed in the character size stored in the character size storage means with size of the frame determined by the frame configuration stored in the frame configuration storage means each time when a character string is stored in the character information storage means in the case where the operation mode has been set to the frame configuration fixed state by the operation mode setting means; and
judgment means which judges whether the size of the whole character string when the newly inputted character string is additionally displayed or printed in the character size stored in the character size storage means fits in the frame or not based on the comparison by the size comparison means,
wherein when the judgment means judges that the size of the whole character string does not fit in the frame, the character size alteration means alters the memory contents of the character size storage means so that the size of each character of the character string including the newly inputted character string will be reduced to a size within a range allowing the character string stored in the character information storage means to fit in the frame.

3. The text editing device according to claim 2, wherein:
the frame configuration storage means stores width of the frame as the size of the frame, and
the size comparison means compares length of the whole character string when the newly inputted character string is additionally displayed or printed in the character size stored in the character size storage means in a column-increasing direction with the width of the frame stored in the frame configuration storage means each time when a character string is stored in the character information storage means.

4. The text editing device according to claim 2, wherein:
the frame configuration storage means stores height of the frame as the size of the frame, and
the size comparison means compares length of the whole character string when the newly inputted character string is additionally displayed or printed in the character size stored in the character size storage means in a line-increasing direction with the height of the frame stored in the frame configuration storage means each time when a character string is stored in the character information storage means.

5. The text editing device according to claim 1, wherein the character size alteration means alters the memory contents of the character size storage means so that the character string stored in the character information storage means will fit in the frame also in cases where the frame configuration stored in the frame configuration storage means is altered and at the same time the operation mode is changed from the frame configuration alterable state to the frame configuration fixed state by the operation mode setting means.

6. The text editing device according to claim 1, wherein when the operation mode has been set to the frame configuration fixed state and character sizes of characters of different sizes have been stored in the character size storage means, the character size alteration means alters the memory contents of the character size storage means so that the character string stored in the character information storage means will fit in the frame while maintaining size ratios among the different character sizes stored in the character size storage means.

7. The text editing device according to claim 1, further comprising line feed position storage means for storing line feed position information to be used for displaying or printing the character string stored in the character information storage means while starting new lines at intended positions,
wherein the character size alteration means alters the memory contents of the character size storage means so that the whole character string stored in the character information storage means will fit in the frame also in cases where the operation mode has been set to the frame configuration fixed state and the line feed position information has been stored in the line feed position storage means.

8. The text editing device according to claim 1, wherein the text editing device is configured as a label writer.

9. The text editing device according to claim 1, wherein the editing operation includes text input operation and line feed operation.

10. The text editing device according to claim 1, further comprising operation mode display control means for displaying a screen image, indicating a change in text display status at the point when the editing operation is executed, depending on the operation mode set by the operation mode setting means.

11. The text editing device according to claim 10, wherein the operation mode display control means indicates text display statuses before and after the editing operation by displaying images corresponding to the frame depending on the operation mode set by the operation mode setting means.

12. The text editing device according to claim 1, wherein the operation mode setting means can set the operation mode to a frame height variable operation mode for displaying or printing the character string stored in the character information storage means to fit in the frame in a state where the frame configuration stored in the frame configuration storage means is alterable only in a frame height direction which is a line-increasing/decreasing direction when the editing operation is executed, as an operation mode included in the frame configuration alterable state.

13. The text editing device according to claim 1, wherein the operation mode setting means can set the operation mode to a frame width variable operation mode for displaying or printing the character string stored in the character information storage means to fit in the frame in a state where the frame configuration stored in the frame configuration storage means is alterable only in a frame width direction which is a column-increasing/decreasing direction when the editing operation is executed, as an operation mode included in the frame configuration alterable state.

14. The text editing device according to claim 1, wherein the operation mode setting means can set the operation mode to a two-direction variable operation mode for displaying or printing the character string stored in the character information storage means to fit in the frame in a state where the frame configuration stored in the frame configuration storage means is alterable both in a line-increasing/decreasing direction and in a column-increasing/decreasing direction when the editing operation is executed, as an operation mode included in the frame configuration alterable state.

15. The text editing device according to claim 1, wherein the operation mode setting means makes an initial setting of the operation mode depending on a print medium on which the character string stored in the character information storage means will be printed.

16. The text editing device according to claim 15, wherein the operation mode setting means initially sets the operation mode to the frame configuration fixed state when the print medium on which the character string stored in the character information storage means will be printed is a tape-like print medium and size of a print area of the tape-like print medium in its longitudinal direction is preset.

17. The text editing device according to claim 13, wherein the operation mode setting means initially sets the operation mode to the frame width variable operation mode when the print medium on which the character string stored in the character information storage means will be printed is a tape-like print medium and size of a print area of the tape-like print medium in its longitudinal direction is not preset.

18. The text editing device according to claim 12, wherein the operation mode setting means initially sets the operation mode to the frame height variable operation mode when the print medium on which the character string stored in the character information storage means will be printed is a print medium having size in the line-increasing/decreasing direction larger than size in a column-increasing/decreasing direction.

19. The text editing device according to claim 1, wherein the operation mode setting means sets the operation mode to the frame configuration fixed state when the frame is newly inputted.

20. A program that causes a computer to function as:
character information storage means for storing a character string as text data;
character size storage means for storing size of each character included in the character string stored in the character information storage means;
frame configuration storage means for storing a configuration of a frame in which the character string stored in the character information storage means is displayed or printed;
operation mode setting means for setting an operation mode, specifying status of displaying or printing of the character string stored in the character information storage means in the frame when editing operation is executed, to operation modes including at least a frame configuration fixed state and a frame configuration alterable state;
character size alteration means for altering memory contents of the character size storage means so that the character string stored in the character information storage means will fit in the frame in cases where the operation mode setting means has set the operation mode to the frame configuration fixed state; and
frame configuration alteration means for altering memory contents of the frame configuration storage means so that the character string stored in the character information storage means will fit in the frame in cases where the operation mode setting means has set the operation mode to the frame configuration alterable state.

21. The program according to claim 20, wherein the character size alteration means includes:
size comparison means which compares size of the whole character string when a newly inputted character string is additionally displayed or printed in the character size stored in the character size storage means with size of the frame determined by the frame configuration stored in the frame configuration storage means each time when a character string is stored in the character information storage means in the case where the operation mode has been set to the frame configuration fixed state by the operation mode setting means; and
judgment means which judges whether the size of the whole character string when the newly inputted character string is additionally displayed or printed in the character size stored in the character size storage means fits in the frame or not based on the comparison by the size comparison means,
wherein when the judgment means judges that the size of the whole character string does not fit in the frame, the character size alteration means alters the memory contents of the character size storage means so that the size of each character of the character string including the newly inputted character string will be reduced to a size within a range allowing the character string stored in the character information storage means to fit in the frame.

22. The program according to claim 21, wherein:
the frame configuration storage means stores height of the frame as the size of the frame, and
the size comparison means compares length of the whole character string when the newly inputted character string is additionally displayed or printed in the character size stored in the character size storage means in a line-increasing direction with the height of the frame stored in the frame configuration storage means each time when a character string is stored in the character information storage means.

23. The program according to claim 21, wherein:
the frame configuration storage means stores width of the frame as the size of the frame, and
the size comparison means compares length of the whole character string when the newly inputted character string is additionally displayed or printed in the character size stored in the character size storage means in a column-increasing direction with the width of the frame stored in the frame configuration storage means each time when a character string is stored in the character information storage means.

24. The program according to claim 20, wherein the character size alteration means alters the memory contents of the character size storage means so that the character string stored in the character information storage means will fit in the frame also in cases where the frame configuration stored in the frame configuration storage means is altered and at the same time the operation mode is changed from the frame configuration alterable state to the frame configuration fixed state by the operation mode setting means.

25. The program according to claim 20, wherein when the operation mode has been set to the frame configuration fixed state and character sizes of characters of different sizes have been stored in the character size storage means, the character size alteration means alters the memory contents of the character size storage means so that the character string stored in the character information storage means will fit in the frame while maintaining size ratios among the different character sizes stored in the character size storage means.

26. The program according to claim 20, the program further causes the computer to function as line feed position storage means for storing line feed position information to be used for displaying or printing the character string stored in the character information storage means while starting new lines at intended positions,
wherein the character size alteration means alters the memory contents of the character size storage means so that the whole character string stored in the character information storage means will fit in the frame also in cases where the operation mode has been set to the frame configuration fixed state and the line feed position information has been stored in the line feed position storage means.

27. The program according to claim 20, the program further causes the computer to function as operation mode display control means for displaying a screen image, indicating a change in text display status at the point when the editing operation is executed, depending on the operation mode set by the operation mode setting means.

28. The program according to claim 27, wherein the operation mode display control means indicates text display statuses before and after the editing operation by displaying images corresponding to the frame depending on the operation mode set by the operation mode setting means.

29. The program according to claim 20, wherein the operation mode setting means can set the operation mode to a frame height variable operation mode for displaying or printing the character string stored in the character information storage means to fit in the frame in a state where the frame configuration stored in the frame configuration storage means is alterable only in a frame height direction which is a line-increasing/decreasing direction when the editing operation is executed, as an operation mode included in the frame configuration alterable state.

30. The program according to claim 20, wherein the operation mode setting means can set the operation mode to a frame width variable operation mode for displaying or printing the character string stored in the character information storage means to fit in the frame in a state where the frame configuration stored in the frame configuration storage means is alterable only in a frame width direction which is a column-increasing/decreasing direction when the editing operation is executed, as an operation mode included in the frame configuration alterable state.

31. The program according to claim 20, wherein the operation mode setting means can set the operation mode to a two-direction variable operation mode for displaying or printing the character string stored in the character information storage means to fit in the frame in a state where the frame configuration stored in the frame configuration storage means is alterable both in a line-increasing/decreasing direction and in a column-increasing/decreasing direction when the editing operation is executed, as an operation mode included in the frame configuration alterable state.

32. The program according to claim 20, wherein the operation mode setting means makes an initial setting of the operation mode depending on a print medium on which the character string stored in the character information storage means will be printed.

33. The program according to claim 20, wherein the operation mode setting means initially sets the operation mode to the frame configuration fixed state when the print medium on which the character string stored in the character information storage means will be printed is a tape-like print medium and size of a print area of the tape-like print medium in its longitudinal direction is preset.

34. The program according to claim 30, wherein the operation mode setting means initially sets the operation mode to the frame width variable operation mode when the print medium on which the character string stored in the character information storage means will be printed is a tape-like print medium and size of a print area of the tape-like print medium in its longitudinal direction is not preset.

35. The program according to claim 29, wherein the operation mode setting means initially sets the operation mode to the frame height variable operation mode when the print medium on which the character string stored in the character information storage means will be printed is a print medium having size in the line-increasing/decreasing direction larger than size in a column-increasing/decreasing direction.

36. The program according to claim 20, wherein the operation mode setting means sets the operation mode to the frame configuration fixed state when the frame is newly inputted.
